(19)

Europäisches Patentamt

European Patent Office

Office européen des brevets

(11) **EP 2 495 853 A1**

(12) **EUROPEAN PATENT APPLICATION**

(43) Date of publication:
**05.09.2012 Bulletin 2012/36**

(51) Int Cl.:
*H02K 53/00* (2006.01)

(21) Application number: **11001774.6**

(22) Date of filing: **03.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Neag, Zacharias Johann, Dr.-Ing.
03780 Pego Alicante (ES)**

(72) Inventor: **Neag, Zacharias Johann, Dr.-Ing.
03780 Pego Alicante (ES)**

(54) **Magneto-electric motor**

(57)    The present invention intends to achieve a Sui Generis Magneto-Electric (SGME) motor consisting of a motor body having a stator with a ferromagnetic core of toroidal shape carrying wrapped-up windings and a rotor carrying permanent magnets uniformly distributed around ferromagnetic discs as well as of an external box with inductors and capacitors which together with the stator windings form a motor integrated electric oscillating circuit. The motor is able to operate in a self driving mode based on the internally developed energy as a result of the interaction between the permanently available magnetic moment of the magnets sitting on the rotor discs and the magnetic flux density induced in the motor air gap due to the self and permanently generated currents within the electric oscillating circuit, supplied to the stator windings. A motor torque is produced according to the electromechanical energy conversion principles and due to the motor self commutating capability the torque becomes unidirectional and further, by means of the angular displacement of the rotor, a continuous rotating movement of the motor shaft is ensured. The motor presented herein has a wide range of industrial applications being able to face mechanical loads from fractional to tens of kW and even more depending on size and design. The main area of application are vehicles (bicycles, mopeds, cars, boats), electric (in case of a motor-generator design) or mechanical power supply especially in remote areas and everywhere a totally independent power and energy sources are required. It could be also used for household supply or for co-generation purposes by being connected to electricity authority networks. Environmentally impeccable clean power and energy are offered.

Fig. 7: The entire motor electric circuit with its internal and external parts of the LC oscillating circuit

EP 2 495 853 A1

**Description**

FIELD OF THE INVENTION

Due to its specific features the motor disclosed by the present invention introduces a new kind of magneto-electric motors which is not yet known. The motor could be considered and classified as a brushless permanent-magnet, electric oscillating circuit related and self driven motor working based of its internal energy developing sources.

BACKGROUND OF THE INVENTION

Within the big family of electric motors ([R2, R3, R4, R7]), the permanent-magnet motors have found a vide variety of low-power applications due to a series of construction, operation and maintenance advantages.

Permanent-magnet motors are electric motors in which the excitation field is produced by permanent magnets. Compared with the classical alternating (AC) and direct current (DC) motors, the permanent-magnet motors are smaller, lighter and have lower power losses. The state of the art of the permanent-magnet motors shows commutator ([R3], pg. 340) and brushless motors ([R1]).

In the permanent-magnet commutator motors the excitation field is generated by permanent magnets installed on the stator side whereas the rotor comprises the current-carrying conductors. A commutator device is solidly installed on the rotor to reverse the polarity of a DC current coming to the rotor from an external circuit via brushes, every time a given conductor set passes a given magnet field pole, in order to ensure an unidirectional resulting torque ([R3], chapter 4, pg. 216).

In the permanent-magnet brushless motors which are commutatorless motors the excitation field is generated by permanent magnets installed on the moving rotor while the current-carrying conductors remain stationary with the stator.

There are permanent-magnet brushless DC and AC motors. In the brushless DC motors which are supplied by a DC current source, the current polarity reversal is performed by power transistors which must be switched in synchronism with the rotor position ([R2] pg.233) and the motor is said to operate with square wave currents ([R1], pg. 1-2). In the brushless AC motors the supply currents are sinus waves and the motors operate with a fixed excitation from the permanent magnets and with a rotating ampere-conductor distribution similar to the rotating magnetic field in the induction or AC synchronous motors, hence the AC name. Even if there is some confusion concerning their designation in different countries, a clear distinction between them is that the DC motors work based on square wave currents whereas the AC motors on sinus wave currents ([R1] pg. 1-3).

There are some drawbacks to be mentioned in case of the existing permanent-magnet brushless motors. They need to be supplied with current specific waves from an external source to generate the motor torque. This makes these motors as in fact all other electric motor types dependent on a corresponding energy source. To get the appropriate supply currents these motors need also power transistor devices to perform electronically the required switch. Because of lack of a continuous and uniform distribution of the iron mass of the stator winding cores around the rotor, except for some very small slotless motors, there is also a reluctance non-uniformity in the magnetic circuit of the motors, which leads to cogging or ripple effects with their known troublesome consequences.

The present invention intends to introduce a new type of permanent-magnet brushless motors which enable to eliminate the above mentioned drawbacks, mainly the dependence of an energy input from outside.

According to the knowledge of the author of the invention claimed herein there is at the present moment no any filed and protected invention claiming a magneto-electric motor working on itself based on its internally developed energy as a result of the interaction between permanent magnets and the currents of an own electric oscillating circuit.

SUMMARY OF THE INVENTION

The present invention claims a sui generis magneto-electric (SGME) motor (a motor being the only example of its kind, a unique motor) which is able to operate in a self driving mode based on its internal energy developing sources.

The motor consists of a motor body with stator and rotor parts including permanent magnets (Fig. 1 and Fig. 2) and of an external inductor (L) - capacitor (C) part (Fig. 7) integrated into the whole motor electric circuit to form an electric oscillating circuit, further named the LC oscillating circuit.

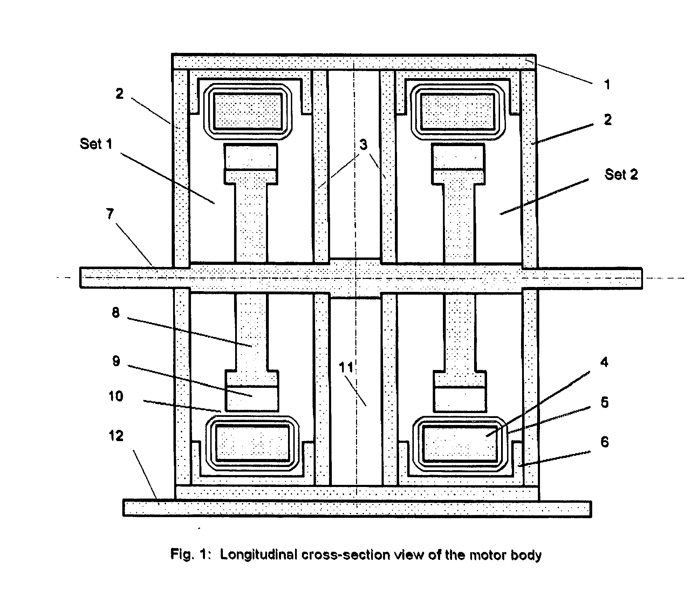

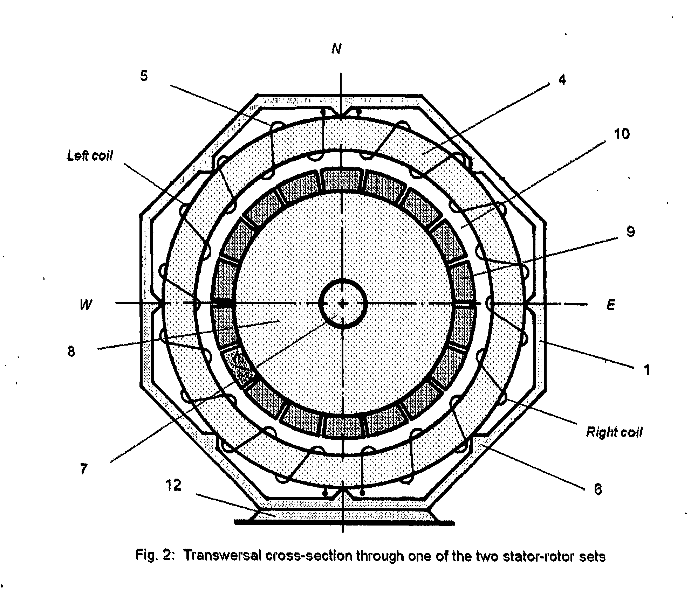

The motor body incorporates the stator and the rotor wherein the rotor holds on a common shaft two discs carrying the permanent magnets (Fig. 2) and the stator is built up to correspond to the rotor double disc design (Fig. 1) thus the motor body is characterized by two stator-rotor sets and one common motor shaft.

The stator holds for each stator-rotor set a ferromagnetic core of a torus shape (Fig. 2) centred to the motor shaft and carrying two coils of enamelled copper wires wrapped around the core to form a left and a right winding related to the torus vertical axis (Figures 2 to 7).

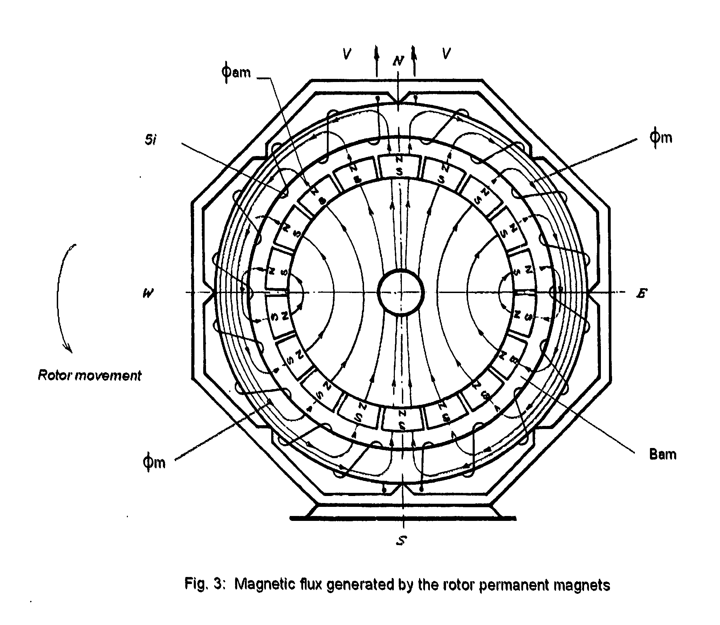

The rotor discs are also of ferromagnetic material. Each rotor disc (Fig. 2 and Fig. 3) carries a plurality of permanent magnets of neodymium-iron-boron type ([R4] chapter1, [R11] pg. 45) and of circular segment profile with an optimized height, distributed around the disc circumference with their northern and southern poles in such a way as to enable each rotor disc to become a magnetic dipole with radial pole orientation (Fig. 3) and having its own magnetic moment. Several permanent magnet pieces are used to take the advantage of a better magnetic flux density distribution at each magnet pole face and of an easier installation on the rotor discs especially in case a high motor power with appropriate magnet sizes is required.

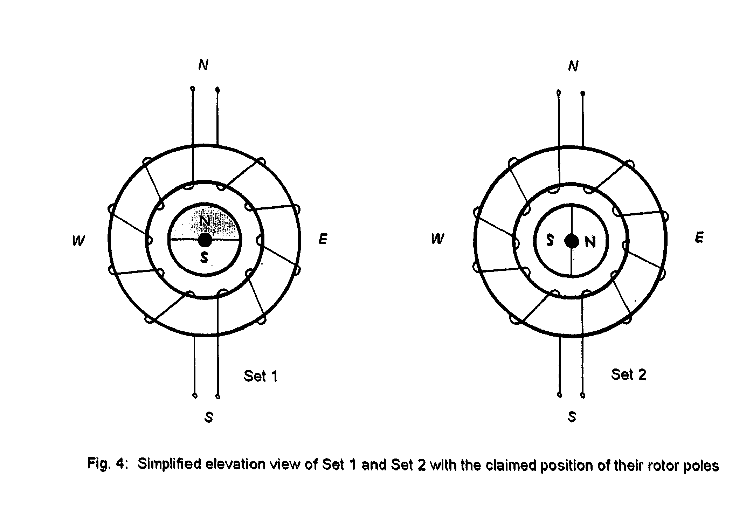

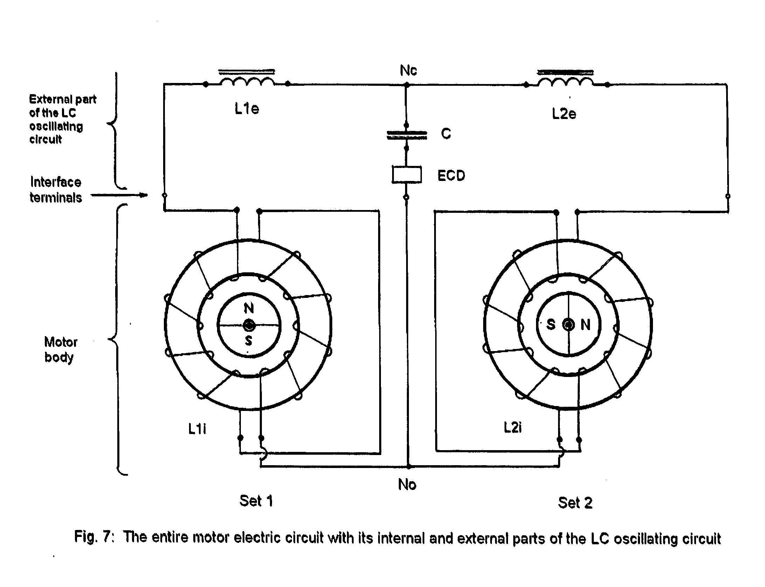

The rotor discs of the two sets are 90° radially shifted to each other enabling a 90° shifting of the north-south direction of the set dipoles (Fig. 4 and Fig 7), a key design feature having a substantial contribution to the particular operation mode of the motor.

The permanent magnets of each rotor disc induce magnetic fluxes along the magnetic circuits appearing on both the left and the right branches of the stator torus (Fig. 3). The flux paths include the air gap, the torus core, the disc body and the magnets themselves and cross the internal faces of the winding coils too. Due to the full radial symmetry of the stator-rotor structure and of the circumferential continuity and uniformity of the stator core, the magnetic circuit reluctance remains the same irrespective of the stator-rotor positions with corresponding advantages including the avoidance of the cogging effect.

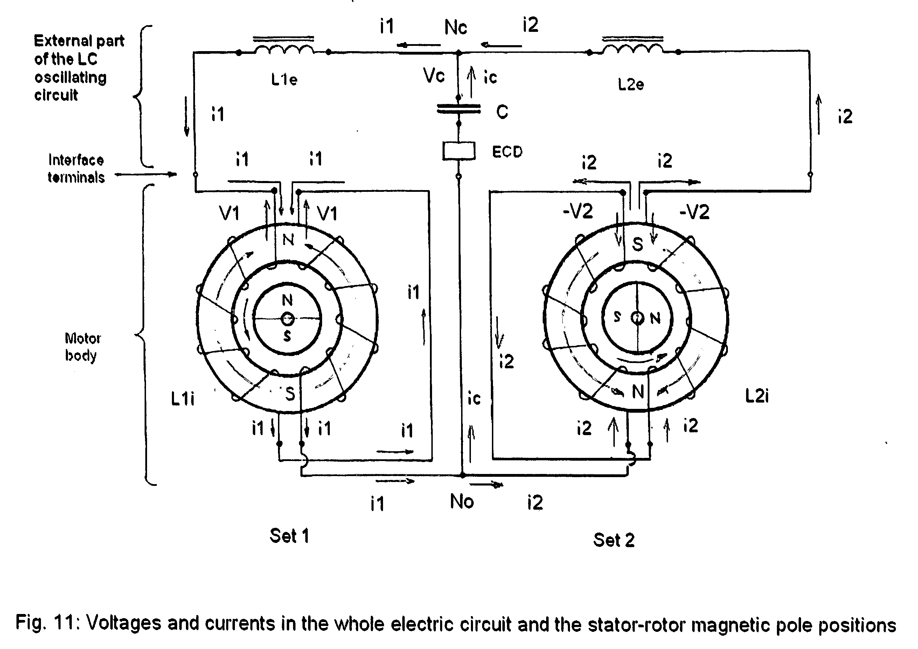

The whole electric circuit of the motor (Fig. 7) consists of the stator winding coils of both sets S1 and S2 (see notations L1i i and L2i), and of the associated external part of the LC oscillating circuit consisting of the two inductors L1e and L2e and of one common capacitor bank C altogether connected in a way to form two series oscillating circuits connected in parallel to share out the common capacitor bank. The LC oscillating circuit contains also an electronic control device ECD (Fig. 7 and Fig. 11) for current limiting and motor speed / torque control purposes.

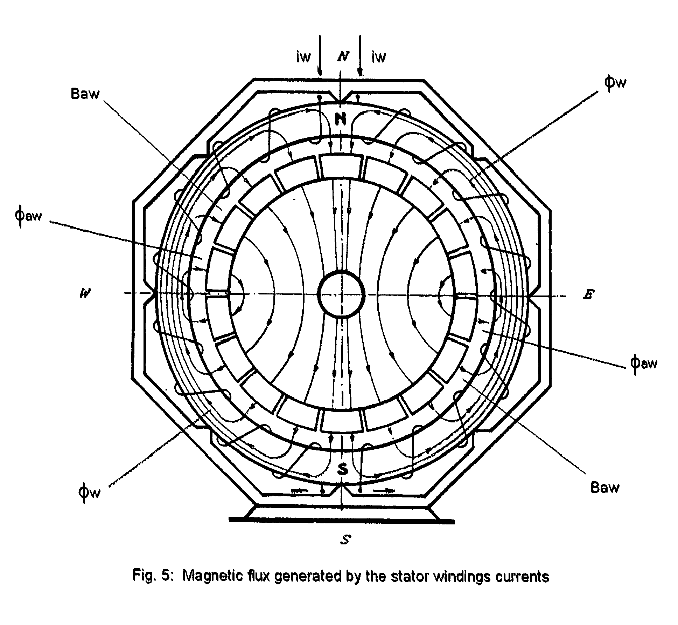

The aim of the motor LC oscillating circuit based on the scheme as claimed in Fig 7 is to let generate the oscillating currents necessary to induce in the stator windings and cores the magnetic fluxes and the corresponding magnetic flux densities in the stator-rotor air gapes (Figures 5, 6 and 11) which will interact with the rotor magnetic moments and will develop the motor torque (see also further below).

Since the motor operation is unusually complex it can be analysed only by means of computer simulations using specialized software for electric network transient and steady state studies.

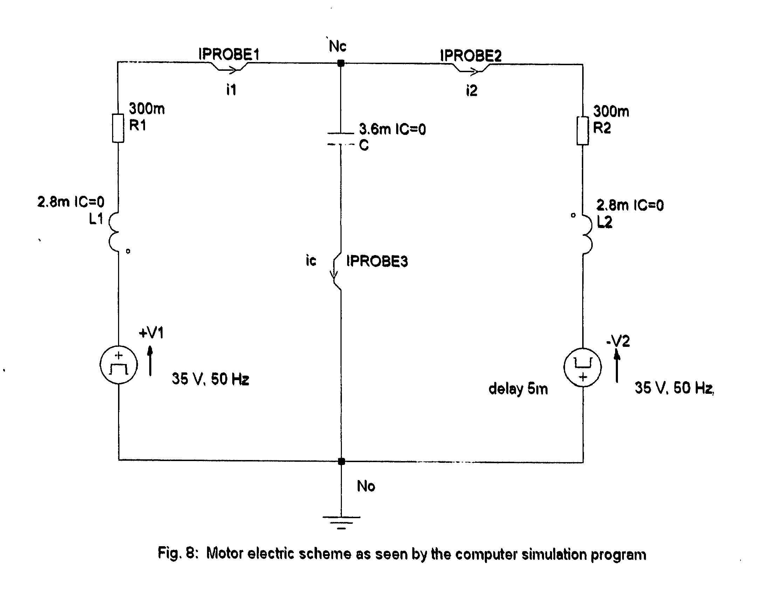

Fig. 8 shows the motor electric circuit in the way the scheme of Fig. 7 is taken over by the applied computer simulation program to enable example applications with assumed data for the circuit component parameters i.e. voltages and inductance, capacitance and resistance values.

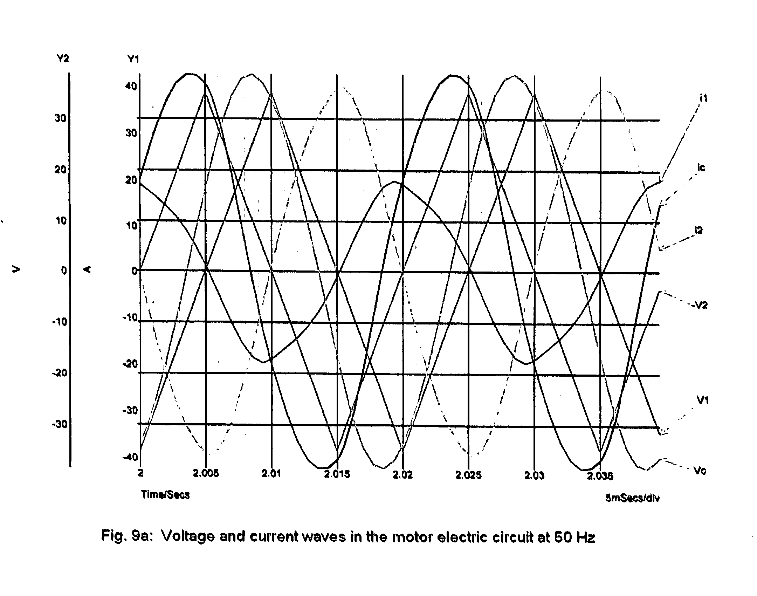

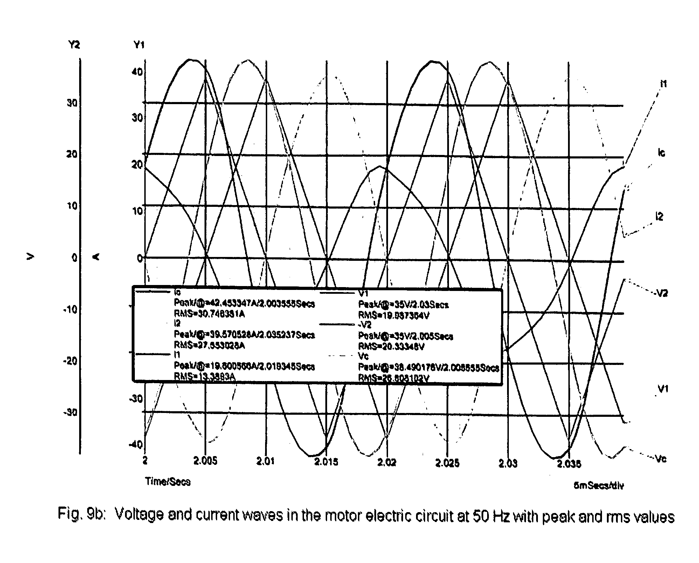

The results of the motor operation simulation presented in Figures 9a and 9b show the voltages and the currents within the whole motor electric circuit as waves with their amplitudes, frequency and phases for the assumed example application.

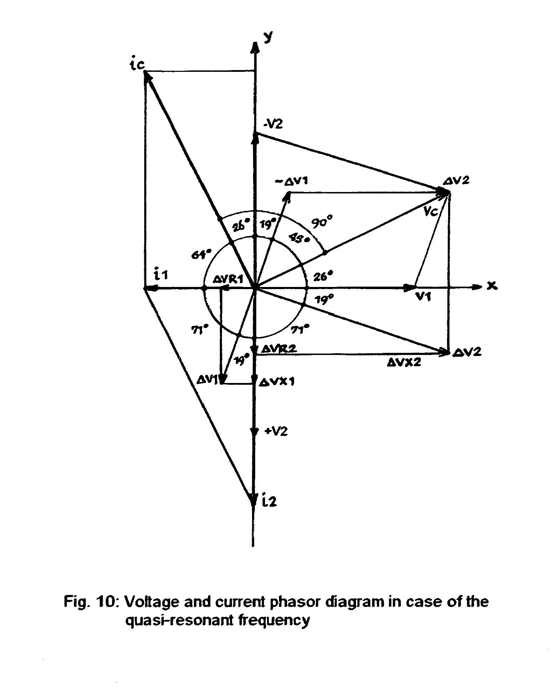

A more and dipper understanding of the relation between various parameters is made available by means of the phasor diagram shown in Fig. 10 and of the Equations presented in the detailed description.

To put the motor in operation it shall be started by means of a conveniently selected device able to bring the motor for a very short time up to a frequency of about 50% of the nominal one. This device can be a mechanical or an electrical starter as for instance similar to a car starting system.

Once started, the relative rotating movement between rotor and stator (Fig. 3 and Fig. 11) induces into the stator windings of both sets electromotive forces according to the Faraday Induction Law ([R5] pages 174-175), further named as voltages V1 and V2 (Figures 8, 9 to 11).

The voltages V1 and V2 applied to the interface terminals of the motor body electric circuit and of the external part of the LC oscillating circuit (Fig. 11) make the whole electric circuit working, create a driving voltage Vc at the capacitor node Nc and give rise to the oscillating currents ic through the capacitor and i1 and i2 in the two set circuits including the stator windings.

The LC oscillating circuit works as two serial oscillating circuits connected in parallel at the nodes Nc and No (Figures 8 and 11) and has two relevant eigenvalues, one being the resonant frequency for which the circuit responds as having the two inductances L1 and L2 working in parallel and also in parallel with the capacitor bank C, with the currents i1 and i2 in counter-phase and the other one being a quasi-resonant frequency for which the circuit responds as seeing the two set inductances separately (only each one set inductance works in parallel with the capacitor bank), the currents i1 and i2 coming in quadrature to each other (Fig. 10) as further explained within the detailed description of the invention.

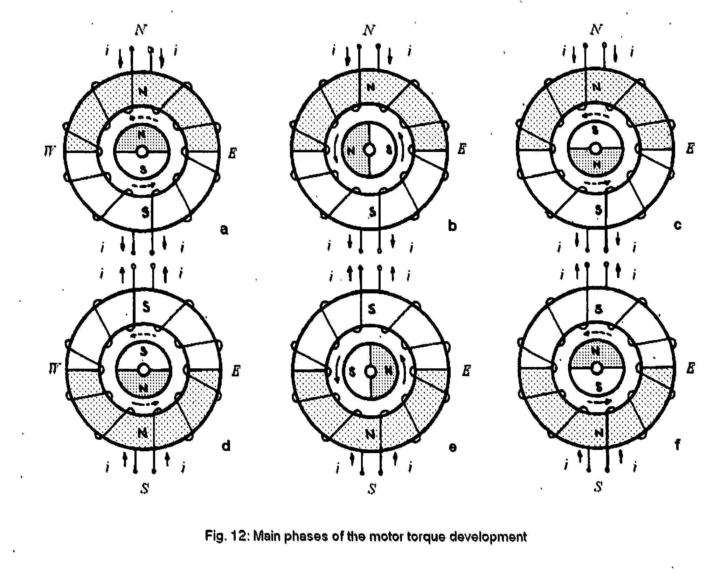

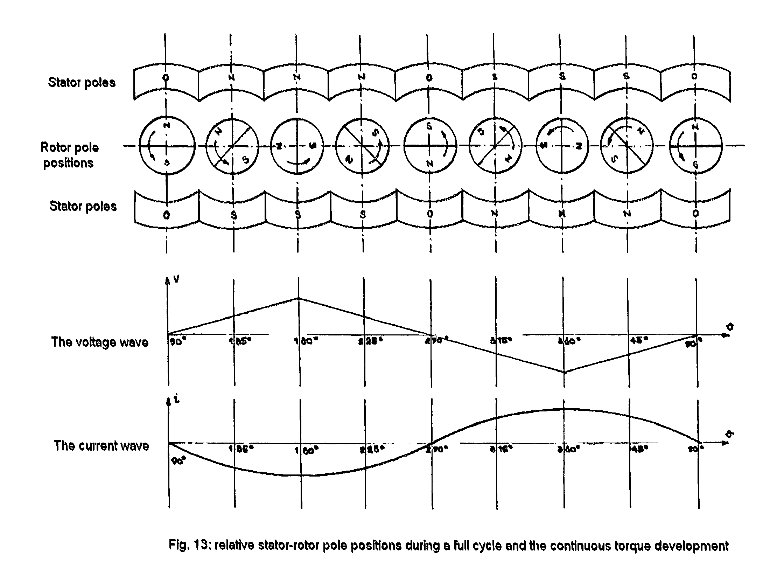

The currents i1 and i2 flowing through the stator windings are the source of the magnetic flux induced in the stator core branches (Fig. 5) and generate the magnetic northern and southern poles in the stator core as shown in Figures 5, 6 and 11. In case of the quasi-resonant frequency these currents are keeping pace and come in phase with the voltages V1 and V2 (Figures 9 and 10) i.e. with the rotor magnetic poles (Figures 11 and 13) and give rise by means of the correspondingly induced magnetic flux density in the air gap to the rotor torque (Figures 12 and 13) as being actually active currents even that they are originating from reactive sources as inductors and capacitors.

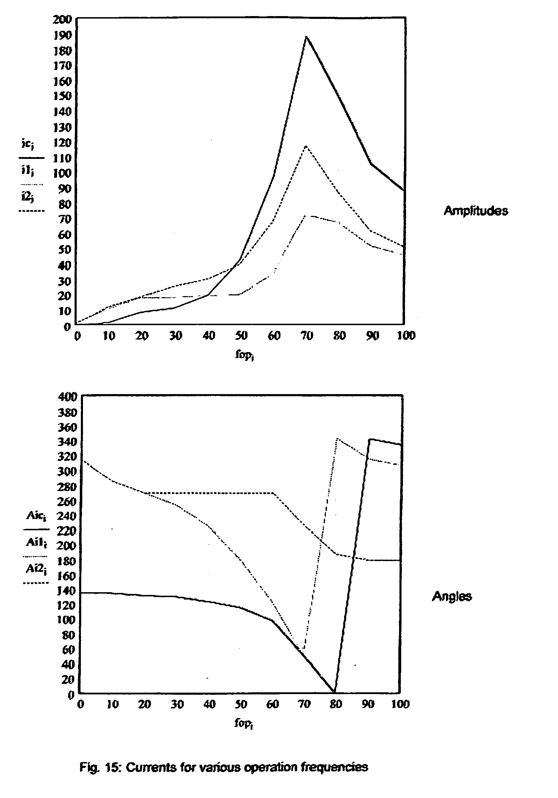

The inductance and capacitance values of the inductors and capacitor bank are selected in such a way as to enable the motor to operate at frequencies of the order of magnitude of the industrial ones proper for electric machinery (e.g. 15 to 60 Hz) and these frequencies to be around the quasi-resonant one. The resonant frequency (70 Hz in case of the example application shown in Fig. 15) which leads as known to extremely high currents can be avoided to appear by means of the automatically working electronic control device ECD (Fig. 11).

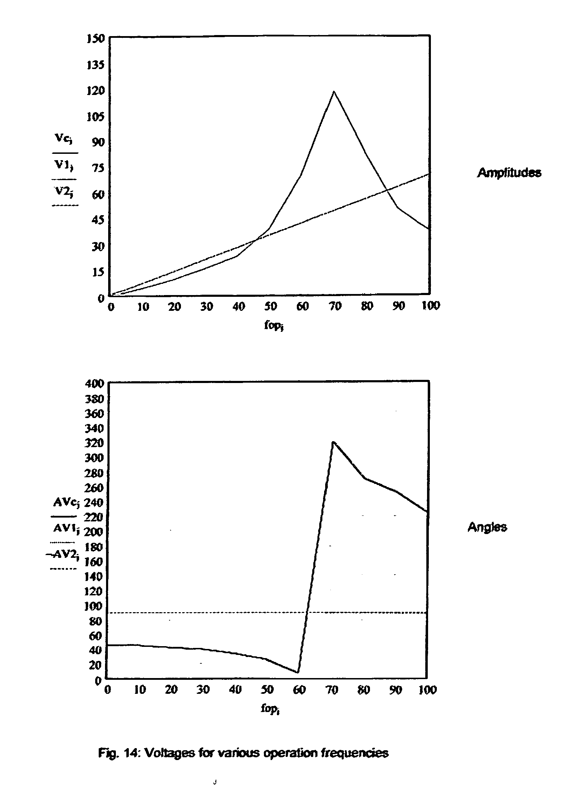

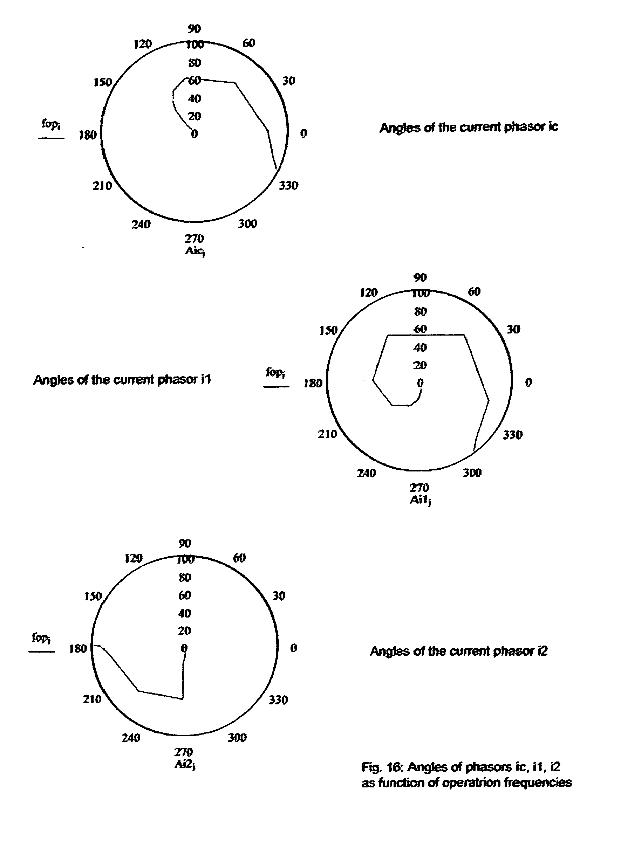

The motor response according to the actual operation frequencies can be visualised by means of the analysis of voltage and current wave amplitudes and phasor angles as found out based on the computer simulation results depicted in Figures 14 to 16 wherein the voltage amplitudes and phasor angles (Fig. 14) and the current amplitudes and phasor angles in Cartesians coordinates (Fig. 15) and the current phasor angles in polar coordinates (Fig. 16) are shown with their excursions as a function of the operation frequency.

The current amplitudes can be kept within acceptable limits from the thermal effect point of view for an operation frequency range which includes the quasi-resonant one (50 Hz in case of the example application shown in Fig. 15) and extends slightly above it, by means of the electronic control device ECD (Fig. 11).

Apart from the optimal operation frequency which is the quasi-resonant one and for which both sets work with their currents i1 and i2 keeping full pace with their voltages V1 and V2 (Figures 9 and 10) and develop full torques, the Set 2 current i2 keeps pace with the voltage V2 i.e. with the corresponding rotor poles and therefore keeps its capability to develop full torque for a large range of operation frequencies whereas the Set 1 current i1 shows an ample angle excursion and can become less active for frequencies substantially deviating from the quasi-resonant one (Fig. 15 and Fig. 16).

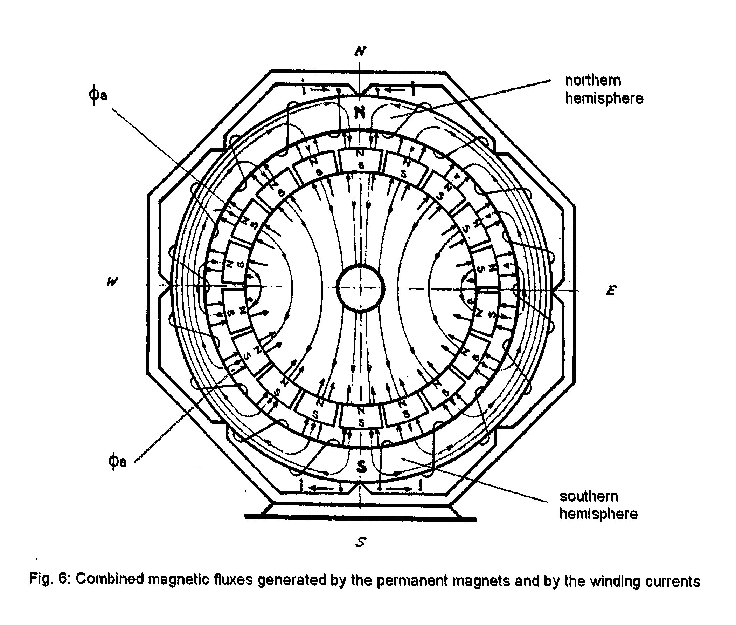

The motor develops, as stated by the electromechanical energy conversion principles ([R4] Chapter 3) and more specifically by the force and torque on magnetic dipole theory ([R6] pg. 167) a torque proportional to the product between the rotor magnetic moment due to the permanent magnets sitting around the rotor discs (Fig. 3) and the magnetic flux density induced in the air gap due to the stator winding currents i1 and i2 supplied by the LC oscillating circuit (Fig. 5). The interaction between the rotor magnetic moment and the air gap field is depicted in Figures 6, 11, 12 as well as in Fig. 13 which refers also to the detailed torque development during a full 360° rotor revolving cycle.

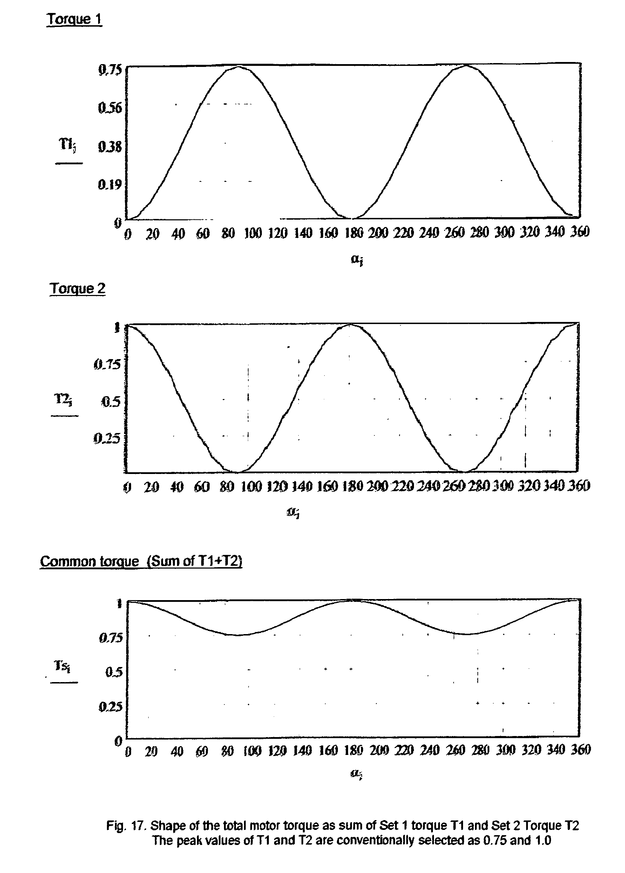

During the rotor revolving cycle the stator winding oscillating currents i1 and i2 change their direction and subsequently lead to a polarity reversal of the winding flux and of the stator core poles (Fig. 13), this change taking place, in case of the quasi-resonant frequency, simultaneously with the rotor pole position change and so, a continuous and unidirectional torque (Fig. 17) is automatically ensured by the current self-commutating effect.

The motor has a total torque equal to the sum of the torques of Set 1 and Set 2, with a variable amount per cycle. The torque wave (Fig. 17) depicts the unidirectional and pulsating features of the torque and the pulsating effect reflects also the difference between the two set currents i1 and i2 (Figures 9 and 10).

The motor reaches a power corresponding to the sum of developed torques of Set 1 and Set 2 each multiplied by the rotor angular frequency. A relatively low level of active power losses are incurred as a consequence of the circuit resistances (Fig. 8).

The motor is characterized by the particular property to work in a self driving mode based on the internally developed energy as a result of the interaction between the rotor permanent magnets and the stator currents permanently supplied by the own electric oscillating circuit as plentifully explained within the detailed description of the invention.

The motor has a simple construction and therefore it is easy to be manufactured. It is very simple to be operated and is almost maintenance free. The motor is environmentally very clean. No emissions, no radiations, has a very low warming effect and is very silent.

The motor can be designed for various powers, volumes, shapes, weights and operation frequencies, all these parameters within limits depending only on the application requirements, materials and components used and on manufacture technology, a wide field for further research, design and experimental work being thus opened.

The motor presented herein can be used for a wide range of industrial applications and is able to face mechanical loads from fractional to tens of kW and even more depending on size and design. The main area of application are vehicles (bicycles, mopeds, cars, boats), electric (in case of a motor-generator design) or mechanical power supply especially in remote areas and everywhere a totally independent and environmentally clean energy source is required. The motor with an appropriately coupled generator can also be used for household supply and for electric energy co-generation purposes being connected directly or via a rectifier-inverter and a smart meter to electricity authority transmission / distribution networks for energy sales, enabling an electricity mass production from small but many sources.

BRIEF DESCRIPTION OF THE DRAWINGS

Fig. 1                shows the longitudinal (axial) cross-section view of the motor body

Fig. 2          presents the relevant elevation of the motor body as the transversal cross-section through one of the two stator-rotor sets

Fig. 3          shows the path of the magnetic flux generated by the rotor permanent magnets

Fig. 4          presents a simplified elevation view of the preferred positions of Set 1 and Set 2 discs on the shaft, being 90° radially shifted one versus the other

Fig. 5          shows the path of the magnetic flux generated by the stator winding currents

Fig. 6          shows the combined magnetic fluxes generated by the rotor permanent magnets and by the stator winding currents

Fig. 7          presents the motor electric circuit as a whole i.e. the stator winding coils of motor body Set 1 and Set 2 and the external part of the LC oscillating circuit

Fig. 8          shows the whole motor electric scheme as interpreted by the computer program for the motor operation simulation

Figures 9a and 9b    present the computer simulation results i.e. the voltage and the current waves within the motor body and the external oscillating circuit part during operation at the quasi-resonant frequency

Fig. 10         shows the voltages and the currents according to the simulation results as phasor diagram typical to the optimal motor operation frequency i.e. the quasi-resonant frequency

Fig. 11         shows the induced voltages and the current flows in the full electric circuit and the induced magnetic fluxes and poles in the stator core vis-à-vis to the magnetic poles of the specifically arranged rotor discs of the two motor sets

Fig. 12         shows the main phases of the motor torque development based on the interaction between the rotor and stator magnetic poles in their various relative positions

Fig. 13         presents the relative stator-rotor pole positions during a 360° cycle as well as the voltage and current waves with their polarity change leading to a simultaneous stator flux polarity change and consequently to a continuous and unidirectional torque development.

Fig. 14         shows the amplitudes and angles of the voltage phasors in the motor electric circuit for various operation frequencies, in rectangular coordinates

Fig. 15         shows the amplitudes and angles of the current phasors in the motor electric circuit for various operation frequencies, in rectangular coordinates

Fig. 16         shows the angles of all current phasors for various operation frequencies, in polar coordinates

Fig. 17         shows the total motor torque shape and amount in p.u. for one motor shaft rotating cycle.

DETAILED DESCRIPTION OF THE INVENTION

a) THE PREFERRED EMBODIMENT

The motor claimed by the present invention consists of two main parts (Fig. 7) i.e. the motor body and an associated external electric oscillating circuit part which is an integral component of the motor ensuring its specific operation.

Referring now in more detail to the drawings wherein like reference numerals refer to like elements, Fig. 1 shows the longitudinal cross-sectional view of the motor body with its stator and rotor. There are two stator-rotor sets, Set 1 and Set 2 as depicted in Figures 1 and 7. They are identical from the construction point of view except for the radial positioning on the shaft of the rotor discs with their permanent magnets, as shown in Figures 4 and 7.

Fig. 2 presents the transversal cross-section through one of the stator-rotor sets as a relevant elevation view of the preferred embodiment of the motor body.

As shown in Fig. 1 and in Fig. 2, the stator consists of the lateral covers 1, the frontal covers 2 and the internal walls 3 as well as of the stator windings made up of the enamelled copper wires 5 wrapped around a ferromagnetic core 4 of a ring form sitting on the holders 6 fastened to the internal walls 3, to the frontal covers 2 and to the lateral covers 1. All parts constituting the machine frame i.e. the covers 1 and 2, the internal walls 3 and the winding holders 6 as well as the main holding plate 12 are of aluminium. Between the two stator-rotor sets there is a free room used for electric connections. All motor casing parts (1, 2and 3) hold apertures for cooling purposes.

The rotor consists of the shaft 7 of steel, sitting on ball bearings accommodated in the frontal covers 2 and in the internal walls 3 and of the rotor discs 8 being of ferromagnetic material and carrying a plurality of permanent magnets 9 uniformly distributed around the disc circumferences. The air gaps 10 lie between the crown of permanent magnets 9 and the ferromagnetic core 4 carrying the wires 5 of the windings (Figures 1 and 2).

The rotor discs 8 fixed on the shaft 7 can rotate together with the permanent magnets with reference to the stator means. In order to avoid any reluctance non-uniformity between the permanent magnets around the rotor discs and the ferromagnetic mass of the stator winding core, leading to cogging effect, the winding core 4 has a perfect toroidal shape with a constant circumferential cross-section and is perfectly centred to the rotor axis by means of the core holders 6 (Figures 1 and 2).

The permanent magnets 9 (Figures 1 to 3) are of high energy, rare earths i.e. neodymium-iron-boron type, the strongest available at present, with a remanent magnetization Br up to 1.25 Tesla and a coercive magnetic field strength Hc up to -940 kA/m ([R4] pg. 36 and 42, [R10] pg. 384, [R11] pg 73). They have a ring segment shape and are sited on the circumference of the rotor discs as near as possible to each other at equal distances by means of very shallow slots cut around the disc circumferential surface to firmly keep the magnets in radial and circumferential directions. To better keep the magnets in their position in axial directions, disc covers of nonmagnetic material can be placed on both faces of the discs.

The reason for the magnet pieces to have a ring segment shape is to enable a thin and uniform air gap to the stator windings and winding cores. The reason of having a plurality of magnets instead of only one big piece per disc pole is to achieve a higher magnetic flux density at each piece pole. An easy installation on the discs during manufacture is also meant.

The thickness of the permanent magnets shall be selected in a way to lead, together with the air gap dimensions, to a load line enabling to operate at their highest possible energy product ([R2] pg. 264, [R10], pg. 366) and consequently to achieve the lowest possible magnetic material volume.

The arrangement of the permanent magnets around the rotor discs by being oriented half of them with the north poles and the other half with the south poles outwards as shown in Fig. 3, enables each rotor disc to become a magnetic dipole with its pole pair north N and south S (see Figures 4, 7 and 11) and with its corresponding magnetic moment ([R5] pg. 141, [R10] pg. 263, [R12] pg. 7) which is a fundamental condition for the motor operation.

As a very important functional aspect of the disclosed invention, as explained in more detail later within the motor operation description it is here to mention that the discs of the two stator-rotor sets Set 1 and Set 2, with their permanent magnets sitting around the disc circumferences are installed on the rotor shaft in such a way that the north-south pole axes of the two rotor discs and their magnetic moment orientations are 90° radially shifted to each other, as shown in Figures 4, 7 and 11.

Fig. 3 shows also the paths of the magnetic fluxes Φm induced by the rotor permanent magnets along the magnetic circuits appearing on both the left and the right sides of the motor elevation view. The fluxes go out from each magnet face of northern polarity by heading the winding core, cross the air gap and the internal portions of the stator winding wires 5i, continue through the core up to a zone where there are permanent magnets with their south polarity facing the internal face of the stator winding and core, cross again the air gap and the permanent magnets themselves, penetrate the rotor disc body and finally close the magnetic path by reaching the southern poles of the path starting magnets.

An orientation system useful for the following explanations, consisting of the cardinal points E (east), N (north), W (west) and S (south) attached to the stator is presented also in Figures 2, 3, 5 and 6). In the *W-N-E* zone the flux goes from the magnets toward to the core whereas in the *W-S-E* zone the flux come back from the core towards the magnets. Due to the uniform distribution of the permanent magnets around the disc circumference, the Φm flux in the air gap i.e. the Φam is also uniformly distributed as is the flux density Bam too (Fig. 3). However, in the winding core the flux Φm shows a gradual increase of its density seen from the "polar" (*N and S*) to the "equatorial" (*W and E*) zones and a decreasing density from the equatorial zones to the polar zones. This non-uniform flux density within the windings core does not affect the motor operation unless it lies conveniently underneath the material saturation value.

The copper wires 5 are wrapped around the ferromagnetic core 4 in such a way that two coils each of them extending on one half of the core 4, one on the left side and the other on the right side are placed as presented in Figures 2 to 7 and 11. The ends of the left and right coils are positioned toward the N and S cardinal points of the stator core.

The wires are actually wrapped as tight as possible to reach the maximum number of turns permitted by the internal face of the core in order to obtain high induced electromotive forces ([R5] pg. 175). An air gap as thin as the windings can allow is aimed to reduce as much as possible the reluctance of the magnetic circuits along which both the magnetic fluxes generated by the permanent magnets (Fig. 3) and by the windings current (Fig. 5) are setting their paths.

During motor operation, the currents developed in the motor electric circuit flow through the winding coils and induce into the winding core magnetic fluxes $\Phi w$ as depicted in Fig. 5, which follow the same magnetic paths as described above for the permanent magnet case (see Fig. 3) but in reversed direction. Fig. 5 shows that for the winding currents iw entering the stator coils in the given directions, core fluxes from the S to the N cardinal points in the left and right sides of the core are established and create a north pole N and a south pole S at the N and respectively S cardinal points of the core. Furthermore, due to the presence of the ferromagnetic mass of the rotor disc body at a relative small and constant distance to the stator core, the magnetic flux $\Phi w$ induced in the core steadily leaves the core (see N pole) through its internal face to meat the rotor disc body by crossing the air gap and the permanent magnets and comes back from the rotor disc body to the core (see S pole) also crossing the permanent magnets and the air gap, like a leakage flux $\Phi aw$ which is equally and continuously moulded on the disc circumferences (Fig. 5). The whole upper part N of the windings becomes a northern hemisphere and the whole lower part S, a southern hemisphere (Fig. 6).

The continuous and equal $\Phi aw$ flux distribution in the air gap offers with its resulting flux density Baw (Fig. 5) the ambiance in which the disc magnetic moments generate the rotor torque and consequently the rotor rotation which can be explained by means of the electromechanical energy conversion principles ([R4] Chapter 3) or as shown further using the force and torque on magnetic dipoles theory ([R6] pg. 162-168).

Fig. 6 shows the resulting flux $\Phi a$ in the air gap from the flux induced by the permanent magnets and from the flux induced by the stator currents in case of the relative rotor-stator positions and current flow as presented. The case corresponds to an instable rotor-stator position in which the disc with its magnetic moment is driven by the stator magnetic flux density to move in CW or CCW direction. Other typical relative rotor-stator positions are those corresponding to the blocked and maximum torque positions as thoroughly explained below within the description of the motor torque development (Fig. 12).

Fig. 7 presents the complete electric circuit of the motor as disclosed by the present invention i.e. the motor body Set 1 and Set 2 windings electrically connected to the external part of the oscillating circuit consisting of two inductors L1e and L2e being respectively bound to Set 1 and Set 2 as well as of a capacitor bank C commonly shared by both motor sets. An electronic control device ECD inserted into the capacitor bank circuit is also shown. The motor body circuits and the associated external circuits are linked at the interface terminals.

Fig. 7 also shows the connections of the motor set windings. The left side coil of each set is connected in series with the right side coil. The motor body internal inductances L1i and L2i of the corresponding set windings are serially connected to the external inductances L1e and L2e and together are considered further as the integrated inductors L1 and L2 (see next Fig. 8).

The aim of the motor integrated LC oscillating circuit based on the scheme as claimed in Figures 7 and 11 is to let generate the currents necessary to induce in the stator windings and cores the magnetic fluxes and in the air gap the corresponding flux densities which will interact with the rotor magnetic moment in developing the motor torque, as mentioned above and further explained below.

The capacitor bank C (Fig. 7) consists of a plurality of capacitors each of a given capacitance value, connected in parallel to reach the total capacitance needed in conjunction with the integrated inductances L1 and L2 to ensure the required LC oscillating circuit function. The capacitors shall have a relatively high capacitance and shall be suitable for industrial currents and frequencies.

The external inductors L1e and L2e (Fig. 7) are air gapped inductors of toroidal shape ([R2] pg.35) or rectangular shape ([R4] pg. 5) with high permeability ferromagnetic cores. The air gapped type is needed to keep the inductance value as constant as possible in relation to the variable operation currents. Their inductance values are selected in such a way as to lead together with the winding inductances L1i and L2i to the resulting inductances L1 and L2 (see Fig. 8) which in series with the capacitor bank C are building up oscillating circuits with eigen frequencies enabling an appropriate response to the motor operating frequencies. The characteristics and sizes of the inductors and capacitors can be optimized and tuned to meet the required function.

Since the currents within the oscillating circuit, especially through the capacitor bank can reach relatively high values, they can be conveniently controlled by means of the electronic control device ECD which can be also used for the motor speed / torque control.

b) THE MOTOR OPERATION

Due to the particular design and functional concept of the motor claimed by the present invention, the motor operation mode is also particularly different from that of the existing electric machines as known up to now.

The permanent magnets sitting around the rotor discs (Fig. 3) induce along the magnetic circuit path traversing the rotor discs, stator core, stator-rotor air gap and the magnets themselves a magnetic flux $\Phi m$ which in the air gap, due to the uniform distribution of the magnets around the rotor discs and to the circumferential symmetry of the stator-rotor construction is equal and uniformly distributed as Φam.

As known, a magnetic flux Φ is the result ([R4] pg. 6) of a magnetic-motive force (mmf) Fmm applied to a magnetic circuit having a reluctance Rc. In case of a permanent magnet, the mmf can be deduced from its coercive force Hc and its length lm as follows ([R4] pg. 148-149):

$$Fmm = Hc \times lm \qquad (1)$$

where Fmm (in A, as a current sheet around the magnet) is the mmf of one magnet piece, Hc (in A/m) is the coercive force and lm (in m) is the length of the permanent magnet.

It can be mentioned here that for the strong magnets available at present, a very high mmf can be achieved due to the high coercive force. A piece of magnet of NdFeBo type with an Hc = -940 kA/m and a length of 1 cm has an equivalent magneto-motive force of 9400 A.

For a plurality of permanent magnets pieces connected in series, the resulting mmf is the sum of the mmfs of the individual pieces:

$$Fmms = npms \times Fmm \qquad (2)$$

where Fmms (in A) is the mmf of the series arrangement, npms is the number of magnet pieces arranged in series and Fmm (in A) is the mmf of an individual magnet.

A parallel connection of permanent magnets increases the individual performance referring to the generated magnetic flux Φm and increases also the magnetic moment of the assemblage.

The magnetic flux generated by a number of magnets connected in series ns and a number of magnets connected in parallel np as in case of the present invention can be determined as follows:

$$\Phi m = np \times ns \times \frac{Fmm}{Rc} \qquad (3)$$

where Φm (in V*s) is the magnetic flux, Fmm (in A) is the mmf of one individual permanent magnet (Equation (1) above) and Rc the magnetic circuit reluctance as explained below.

In the air gap the magnetic flux Φm becomes Φam, uniformly distributed (Fig. 3) whereas within the stator core branches it shows a gradually increasing and decreasing amount what is not relevant for the motor operation unless it does not lead to a unacceptable material saturation.

Due to construction and functional symmetries only one magnetic circuit path, for instance the left or the right one of the stator-rotor sets shown in Figures 3, 5 and 6 can be taken into account in determining the magnetic circuit reluctance.

As known, the air gap and the permanent magnets have a much lower magnetic permeability than the ferromagnetic materials used for the winding core and disc body. Additionally, due to design reasons the permanent magnets and the air gap which shall accommodate also the winding coils contribute substantially to the total length of the magnetic circuit path and since their magnetic permeability is much lower than that of the ferromagnetic components of the circuit, only the air gap and the permanent magnets may be considered in determining the magnetic circuit parameters. Consequently, the reluctance of the magnetic circuit ([R4] pg. 6) of the left or the right half of the stator-rotor set results as:

$$Rc = Ra + Rm \qquad (4)$$

with:

$$Ra = \frac{2 \times la}{\mu o \times Aa} \qquad \text{and} \qquad Rm = \frac{2 \times lm}{\mu rm \times \mu o \times Am} \qquad (5)$$

where: $Rc$ (in A / V*s) is the total reluctance of the circuit, $Ra$ the reluctance of the air gap, $Rm$ the reluctance of the permanent magnet, $la$ (in m) is the radial length of the air gap, $\mu o$ (in V*s / A*m) is the magnetic permeability of the air gap (free space), $Aa$ (in m$^2$) the cross-section of the air gap, $lm$ (in m) is the height or length of the permanent magnet, $\mu rm$ is the relative permeability of the magnet material and $Am$ (in m$^2$) is the cross-section of the magnets. $Aa$ shall be understood as being one quarter of the area of the circumferential sheet with a radius at the mid distance between permanent magnets and torus and with a width equal to the width of the torus (see Fig. 1). $Am$ shall be understood as the sum of the individual magnet cross-sections on the N-S direction for a quarter of the total number of permanent magnets. The factors 2 in both formulae (5) reflect the two magnets arranged in series and the two air gaps along the magnet circuit path.

The flux density in the air gap (in T) will be (see Fig. 3):

$$Bam = \frac{\Phi am}{Aa} \qquad (6a)$$

where $\Phi am$ is the flux defined by Equation (3) as $\Phi m$ and $Aa$ the cross-section area as shown in Equations (5).

Depending on the data available, the magnetic flux density generated by the permanent magnets in the air gap for a given magnetic circuit can also be determined by means of an equation of following form ([R2] pg. 39):

$$Bam = \frac{Br}{\dfrac{Aavg}{Amt} + \mu rm \times \dfrac{g}{lm}} \qquad (6b)$$

where $Bam$ (in V*s / m$^2$) is the flux density in the air gap, $Br$ (in V*s / m$^2$) is the remanent magnetisation ([R2] pg. 18-19, [R4] pg. 30) of the permanent magnet material, $Aavg$ (in m$^2$) is the total average air gap area crossed by the flux, $Amt$ (in m$^2$) is the sum of the cross-sectional areas of the permanent magnets, perpendicular to their N-S direction, $\mu rm$ is the relative permeability of the permanent magnets, $g$ (in m) is the length of the air gap and $lm$ (in m) is the length of the permanent magnet piece on its N-S direction. $Aavg$ and $Amt$ can be replaced by $Aa$ and $Am$ as shown in Equations (5).

A comparison of the results by using Equations (6a) and (6b) shows that Equation (6b) yields figures better corresponding to measured values.

As shown in Fig. 5 and Fig. 6, the air gap is crossed also by the magnetic flux generated by the stator windings and this flux can be determined on the basis of the mmf developed by the winding currents and of the magnetic circuit reluctance $Rc$.

For a magnetic circuit consisting in its most part of a high magnetic permeability core holding windings with N conductor turns carrying a current i (in A), the magneto-motive force F (in A-turns) acting on the circuit ([R4] pg. 3 1 nd 4) is:

$$F = N \times i \qquad (7a)$$

In case of present description the magneto-motive force is:

$$Fw = Nbtr \times iw \qquad (7b)$$

where $Fw$ (in A-turns) is the mmf developed within the windings of the stator left and right branches (see Fig. 5), $Ntbr$ is the number of winding turns per stator branch and $iw$ (in A) is the winding current flowing through the stator coils. The currents iw in the motor sets S1 and S2 are further called i1 and i2 (see description and figures).

The magnetic flux Φw (in Vs) generated by the current through the stator windings (see Fig. 5) is the result of the mmf Fw according to Equation (7b) applied to the magnetic circuit reluctance Rc as per Equations (4) and (5):

$$\Phi w = \frac{Fw}{Rc} \tag{8}$$

where Φw (in V*s) is the flux, Fw (in Ampere-turns) is the winding mmf and the Rc (in A / V*s) is the reluctance. The flux density induced in the air gap by the winding currents (see Fig. 5) results as follows:

$$Baw = \frac{\Phi w}{Aa} \tag{9}$$

where Baw (in V*s / m$^2$) is the flux density, Φw (in V*s) is the flux and Aa (in m$^2$) is the area of the air gap crossed by the flux (see Fig. 5) and mentioned as Aa in Equations (5).

The magnetic flux density in the air gap generated by the winding currents i.e. the Baw given above by Equation (9) represents one of the two components of the motor torque amount determined by means of the Equation (17) shown further below.

Assume now that the rotor with its permanent magnets 9 (Figures 1 and 2) starts to rotate in CCW direction from its position with the rotor N-pols facing stator-N point as shown in Fig. 3, which is considered also the 0° rotor position. The rotor flux path shown in Fig. 3 starts also to rotate together with the rotor disc in CCW direction.

Related to the winding coils 5 (Figures 1, 2 and 3), the movement of the permanent magnet flux induces in the coil segments 5i (Fig. 3) facing the magnets a motional electromotive force Vmemf in both the left and the right stator coils, as stated by the Faraday law for a moving conductor in a static magnetic field ([R5] pg. 175):

$$V^m{}_{emf} = \oint_C (u \times B) * dl \qquad (V) \tag{10}$$

where u (in m/s) is the linear displacement velocity of the conductor in the magnetic flux density B (in Tesla) and dl is the elementary length of the conductor (in m). For practical applications the mostly used expression for the motional electromotive force is ([R3] pg. 195):

$$Vmemf = B \times l \times v \tag{11}$$

where I (in m) is the total actual length of the coil segments 5i (Fig. 3) crossed by the flux density B and v (in m/s) is the linear velocity of the relative movement between the coil wire and the magnetic flux. The flux density B in the Equations (10) and (11) above is the flux density Bam generated by the permanent magnets in the air gap, as established by Equations (6a) or (6b).

Since in the *N-W* and *W-S* zones of the left coil the flux (Φam of the permanent magnets cuts the coil segments 5i in opposite directions (Fig. 3), for the 0° starting position (N-N) of the rotor the induced Vmemf in the left coil is zero. For same reason the Vmemf in the right coil is also zero. As rotation proceeds in CCW direction, the N-pole area of permanent magnets brushing the internal coil segments 5i increases and the S-pole area decreases in relation to the coil on the left side and an incremental Vmemf arises heading out of page in the internal coil segments (Fig. 3). This Vmemf direction is further considered as having a positive polarity. A maximum value is reached for the rotor-N to stator-W position for which the N-pole faces of permanent magnets fully cover the internal segments of all wires of the left coil. Rotation continued, the coil area covered by the N-pole faces of permanent magnets decreases and the Vmemf too until the rotor reaches the rotor-N to stator-S position where Vmemf becomes again zero. At this point a polarity reversal of the Vmemf occurs due to the S-pole area of the permanent magnets of the disc starting to face the internal segments 5i of the left coil. Vmemf enters into its negative half cycle with a maximum value reached at the rotor-N to stator-*E* position followed subsequently by decreasing values until the rotor reaches the rotor-N to stator-N position which is again the starting position for which Vmemf is zero. The movement continues, and the Vmemf enters into a new cycle. A similar process occur in the right side of the torus and the required direction of the induced voltage to be added to that one of the left side can be achieved by the series connection of the two stator coils as shown in Fig. 7.

It is obvious that the induced voltage Vmemf is an alternating one and due to the constantly increasing and decreasing of the N-pole and respectively S-pole areas of the disc permanent magnets facing the coil internal wire segments the induced Vmemf is linearly proportional to the rotation angle and its wave results as having a triangular shape. A corresponding periodic function of triangular shape can be determined if required by means of the Fourier analysis ([R9 pg. 237]). The induced voltages Vmemf into the stator coils of Set 1 and Set 2 (Fig. 11) have been called further as voltages V1 and V2 in the description and in Figures 8 to 11.

The voltages V1 and V2 applied to the interface terminals of the motor body electric circuit and of the external part the LC oscillating circuit (Fig. 11) make the whole electric circuit working, create a driving voltage Vc at the capacitor node Nc and give rise to the oscillating currents ic through the capacitor and i1 and i2 in the two set circuits including the stator windings.

As shown, the whole circuit is a relatively complex electric circuit consisting of resistors (see also Fig. 8), inductors and capacitors which have to work together in the given configuration and at various frequencies.

In order to be able to get an appropriate and comprehensive image of the circuit voltages and currents developed during operation with their amplitudes and phases in relation to each other, a detailed simulation was performed by means of the computer program for electric network transient and steady state studies: SIMETRIX / SIMPLIS of CATENA ([R13]).

The electric scheme together with parameter data for all components as required by the program and according to the program standard schematic, is shown in Fig. 8. For the Set 1, the emf V1, inductance L1 and resistance R1 and for Set 2, the emf V2, inductance L2 and resistance R2 as well as the capacitance C have been determined by means of several computer calculations using appropriate programs.

The electric scheme in Fig. 8 is an adaptation of the motor electric scheme presented in Fig. 7 to the program input data form. The scheme components according to the program SIMETRIX, shown in Fig. 8 represent a combination of the actual components shown in Fig. 7 based on the following procedure: Resistances R1 and R2 are the sum of the stator coil wire resistances, of the external inductor resistances and of all connecting wire resistances; the inductances L1 and L2 are the sum of the coil inductances L1 i and L2i and of the additional, external inductances L1e and L2e. The capacitance C is the capacitance of the selected capacitor bank i.e. the sum of the individual capacitors connected in parallel. Letters m attached to the parameter data mean milliohms for resistances, milihenry for inductances and milifarads for the capacitance. Probes to read the currents in the relevant circuit parts have been installed and temporary probes have been used during simulation at the voltage sources V1 and V2 as well at the common node Nc.

The SIMETRIX program allows to represent the alternating voltage sources and to include them into electric schemes by establishing their terminal polarities, their voltage peak values, the working frequency and a selected phase, as also shown in Fig. 8. The source V1 has the plus polarity heading the RL components and the common node Nc and the minus polarity connected to the network neutral node No. In order to simulate the 90° shifting of the V2 source (see Figures 4, 7 and 11), the source was connected with its plus polarity to the No node and with its minus polarity heading the Nc node and additionally a delay of 5 ms i.e. of 90° lagging the source V1 was selected.

The scheme in Fig. 8 shows, related to the circuit common node Nc two RLC series oscillating circuits consisting of the voltage sources V1 and V2, resistors R1 and R2 and the inductors L1 and L2 sharing the capacitor bank C. Nc is the network node where the emfs V1 and V2 after being applied to the circuit sections R1-L1 respectively R2-L2 will build up an alternating voltage driving source Vc (Fig. 11).

Due to the particular design of the motor with its external oscillating circuit part, the whole electric circuit shows also a particular behaviour while driven with alternating voltages of various frequencies. In principle, there will be two characteristic eigen frequencies i.e. a resonant frequency fo corresponding to the connection of the capacitor C in parallel with the left <u>and</u> the right RL branches and a quasi-resonant frequency foq corresponding to the connection in parallel of the capacitor C with the left <u>or</u> the right branch (see Fig. 8).

Depending on the inductance and capacitance values, the resonance frequency of an electric oscillating circuit can be determined as follows ([R9] pg. 189):

$$fo = \frac{1}{2 \times \pi \times \sqrt{L \times C}} \qquad (12)$$

where fo is the resonant frequency in Hz of the circuit consisting of an inductance L in henrys and of a capacitance C in farads.

For the simulation case, L and C values have been selected to lead to eigen frequencies of industrial order of magnitude in order to be in the range of electric motor operating frequencies. For the selected values of L1, L2 and C1 the resonant frequency fo will be 70.7 Hz and the quasi-resonant frequency foq will be 50 Hz. The behaviour of the oscillating circuit at various operation frequencies from very low ones up to frequencies enough high to get a complete image of the motor operation performances is discussed further below.

The parameters of the components of the left and right branches are the same (Fig. 8). The voltage sources V1 and V2 are assumed to be periodic waves of triangular shape with a peak value of 35 (V) and an operation frequency of 50 (Hz) equal to the foq frequency. The Set 2 rotor is installed, for determined reasons, at a 90° radial shifting, to allow the Set 2 source voltage V2 to lag by 90° in CCW direction the Set 1 source voltage V1, thus having a delay of 90° i.e. 5 milliseconds to Set 1, as mentioned above. This arrangement leads for the given rotor-stator configuration as in Fig. 11 to a V2 minus polarity toward the RL components and Nc node (see Fig. 8). Since the SIMETRIX program does not allow to measure voltage values at nodes connected to neutral nodes (No), the voltage value of the V2 source was possible to be measured only at its minus polarity terminal (see Fig. 8). Consequently the voltage of the V2 source is considered and shown all over as -V2.

The results of the computer simulation are shown in Figures 9a and 9b. The instantaneous values of the voltages and currents are shown by means of black-and-white graphs because of the PCT Regulations. They can be identified by means of the annotations shown on the right side of the graph. A much better understanding of the simulation results shown in Figures 9a and 9b is possible by means of the coloured graphs as delivered by the simulation program. These are available and can by provided if required during the search and examination processing. The simulated values of the voltages V1 and V2 can be read by means of the scale Y2 in Volts. The simulated values of currents can be read on the scale Y1 in Amperes. Peak and rms values are presented in a table shown in Figures 9b. The currents designated by the simulation program as iprobe1, iprobe2 and iprobe3 in Fig. 8 are shown in Figures 9a and 9b and further down in the description text as i1 for the current in Set 1 (iprobe1), i2 for the current in Set 2 (iprobe2) and ic for the current through the capacitor bank (iprobe3).

All voltage values are referred to the neutral node No. V1 and V2 show equal peak values (35 V) as assumed and they are shifted as mentioned, shoving that V2 lags V1 by 90° (5 ms) and -V2 leads V1 by 90° (5 ms) or lags V1 by 270° (15 ms) as shown in Figures 9. The Vc as the voltage at the common node Nc is the result of the V1 and of the voltage drop through L1 and R1 or the result of -V2 and of the voltage drop through L2 and R2. Vc lies between V1 and -V2 and shows a maximum value of 38.5 V leading V1 by 26° (see Figures 9 and Fig. 10). The voltage Vc at the common node Nc being directly connected to the capacitor C determines straightforward the value of the current ic through the capacitor which leads by 90° the node voltage Vc (see also Fig. 10).

As mentioned, the voltage sources V1 and V2 are periodic waves of triangular shape. This particular characteristic for a voltage source does not affect to much the wave shape of the other circuit parameters i.e. the node voltage Vc and the resulting currents ic, i1, and i2 within the circuit. Due to the typical relations between the voltages and the currents of the claimed machine, as shown by means of the Formulae (13) to (16) presented below and for operation frequencies in the order of magnitude of the quasi-resonant one, the voltage Vc and the current waves result in satisfactory sinusoidal shapes (Figures 9).

As shown in Fig. 7 and in Fig. 1, Set 1 is not only electrically but also mechanically connected to Set 2, their rotor discs being installed on the same shaft. Consequently they are working at same frequency. Obviously, the frequency of all voltage and current waves is the same and corresponds to the motor operation frequency.

A very useful illustration of the voltages and currents within the motor electric circuit as shown in Figures 9 and of their relations as phasors is given in Fig. 10. All variables are presented in a rectangular system x-y where x and y axes can be read also as the real and imaginary axes. Apart of the main variables like V1, V2, Vc, i1, i2, ic also intermediate variables are shown for example $\Delta$V1, $\Delta$V2 for the voltage drops along branches R1-L1 and R2-L2 with their components $\Delta$VR1, $\Delta$VX1, $\Delta$VR2, $\Delta$VX2.

The Equations showing the relation between these phasors are as follows (Fig. 10):

$$\overline{Vc} = \overline{V1} - \overline{\Delta V1} \qquad \text{or} \qquad \overline{Vc} = -\overline{V2} + \overline{\Delta V2} \qquad (13)$$

$$\overline{i1} = \overline{i2} + \overline{ic} \qquad \text{and} \qquad i1(t) = i2(t) + ic(t) \qquad (14)$$

where for the currents both vector and instantaneous values (Figures 9) are given.

Furthermore, the phasors ΔV1 and ΔV2 can be determined by means of following Equations (see also the phasor diagram in Fig. 10):

$$\overline{\Delta V1} = \overline{\Delta VR1} + \overline{\Delta VX1} \qquad \text{or} \qquad \overline{\Delta V1} = \overline{i1} \times \overline{Z1} \qquad (15a)$$

$$\overline{Z1} = R1 + jX1 \qquad \text{with} \qquad X1 = \omega \times L1 \qquad (15b)$$

$$\overline{\Delta VR1} = R1 \times \overline{i1} \qquad \text{and} \qquad \overline{\Delta VX1} = jX1 \times \overline{i1} \qquad (15c)$$

Similar relations can be written also for the motor Set 2 by using the corresponding phasor and variable names e.g. ΔV2, R2, X2 etc. instead of ΔV1, R1, X1 etc.

The amplitudes and angles of the current phasors i1 and i2 can be checked by means of Equations (15a) and (15b) using Equation (16) below:

$$\overline{i1} = \frac{\overline{\Delta V1}}{\overline{Z1}} = \frac{\overline{V1} - \overline{Vc}}{\overline{Z1}} \qquad \text{and} \qquad \overline{i2} = \frac{\overline{\Delta V2}}{\overline{Z2}} = \frac{\overline{Vc} + \overline{V2}}{\overline{Z2}} \qquad (16)$$

The relations between various variables in Figures 9 are exactly mirrored by the corresponding phasors in Fig. 10. V1 and -V2 are 90° shifted with -V2 leading V1. In the trigonometric sense of direction Vc leads V1 by 26° and ic leads Vc by 90°. And very important, the currents i1 and i2 are exactly in counter phase with the voltages V1 and - V2. The voltage drops ΔV1 and ΔV2 are based on their real and imaginary components related to the corresponding currents i1 and i2. Vc as phasor is the sum of V1 and -ΔV1 or the sum of -V2 and ΔV2. The minus and plus signs of the voltage drops results from the directions of currents and voltages in the Set 1 and Set 2 loops (see Fig. 8 and Fig. 11 for the actual directions of currents) by writing the voltage Equations. The angles between various phasors are easy to be determined from their trigonometric relations. There is a full concordance between the magnitudes and phases of all variables shown in Figures 9 and Fig. 10.

Fig. 11 is a replication of Fig. 7 and shows additionally the voltages and currents in the whole motor electric circuit as results of the computer simulation according to Figures 8 and 9. The directions of currents in Fig. 11 are the actual ones and are in case of i1 and i2 in opposite direction to the conventionally selected current directions in Fig. 8 and in opposite direction of voltages V1 and -V2.

It is again to mention that the phasor diagram presented in Fig. 10 corresponds to the phasor relations for the selected motor operation frequency fop equal to the quasi-resonant frequency foq but such relations can be established also for other operation frequencies. Equations (13) to (16) are valid for all operation frequencies.

Referring back to Fig. 3 and then to Fig. 11 it can be seen again that the moving rotor of Set 1 in CCW direction induces in the stator windings an emf V1 with its positive polarity out of page for the coil segment facing the rotor N-pole. For the rotor-N to stator-N position, the V1 is zero as shown also in Figures 9 at the moment 2.005 sec on the time axis and starts to increase. Continuing its rotation in CCW direction, the Set 1 rotor reaches the rotor-N to stator-W position for which the V1 is maximum as shown also in Figures 9 at the moment 2.01 sec. Further, rotor-N reaches stator-S position and V1 goes to zero at the simulation time 2.015 sec where V1 also changes its polarity. The cycle continues, V1 enter into its negative phase and so on. V1 and V2 waves in Figures 9 are showing not only the voltage values but indirectly also the corresponding rotor pole positions, a useful way to compare also the rotor pole positions with the current wave (Figures 9) and correspondingly to the flux and flux induced poles in the winding cores (Fig. 11).

As mentioned, the currents appear in counter phase with the voltages and taking again the Set 1 as example the current i1 starts also with a zero value (Figures 9) at the simulation time 2.005 sec where it changes its polarity from plus to minus and continues its cycle in pace and counter phase to the voltage V1 (Figures 9). The current enters the winding coils (Fig. 11) and generates a magnetic flux (see also Fig. 5) by creating in the winding core a north pole and a south pole driving by means of the repelling-attracting effects the rotor. After reaching its maximum negative value at the moment of 2.01 sec (Figures 9), the current i1 goes to zero at the moment of 2.015 sec where it reverses again its polarity, this time from negative to positive. At the same time the magnetic flux changes also its direction and consequently the positions of the north and south poles in the winding cores (Fig. 11) and this happens exactly at the moment where the rotor with its poles would have been ready to be blocked by the stator poles. A self commutation of both the voltage and current polarities takes place in line with the rotor positions with respect to the stator (see also Figures 12 and 13). Similar rotor-stator and current-flux relations as described here above for Set 1 are taking place for Set 2 too and can be followed by observing also the 90° shifting of Set 2 rotor (see Figures 9 and Fig. 11).

At any instant the currents at the electric circuit nodes obey the Kirchhoffs current law ([R9] pg. 71) and are accordingly branched into the incoming and outgoing network branches. For instance at the common node Nc (Fig. 11) at any time the sum of the currents i1, i2 and ic is zero and this rule is confirmed by the corresponding instant values in the graph of Figures 9 (see also Equation (14).

Whereas in Fig. 8 (the simulation scheme) the directions of currents were selected conventionally, the directions of currents in the graphs (Figures 9) as well as in Fig. 11 correspond to the actual current directions.

The key and marvellous achievement of the proposed motor design with its electric scheme as a whole is that at an operation frequency equal to the quasi-resonant one, as exemplified in the computer simulation, the winding currents i1 and i2 result, due to the capacitor bank current ic, in counter-phase with the winding voltages V1 and -V2. Subsequently these currents in spite of their reactive nature as originating from inductors and capacitors are acting as being active currents and can generate torques. This change of their acting mode for the motor operation at the quasi-resonant frequency and nearby is due to the fact that the currents keeping pace with the corresponding voltages (Figures 9, Fig. 10, Fig 11), they are keeping pace also with the rotor pole positions and the magnetic fluxes induced into the stator core change their polarities simultaneously with the rotor pole positions. The counter-phase current-voltage relation leads to the effect of gaining in the stator core the right magnetic pole at the right rotor pole position (Fig. 11) which consequently leads to the driving effect. The change in the current acting mode can be shown by means of a much ample presentation of the voltage-current relations using graphs similar to those given in Figures 9, for various operation frequencies around the quasi-resonant one.

As known, in a rotating machine the driving factor is the mechanical moment i.e. the torque applied to the revolving body. There are two ways to explain the torque coming into being in an electric motor namely by means of the electro-mechanical energy conversion principles ([R4] pg. 112, [R6] pg. 167) and/or by means of the Lorentz force ([R4] pg. 113, [R5] pg. 120). Both ways lead to similar results and can be used as conveniently found.

Based on the force and torque on magnetic dipoles theory shown in [R6] pg. 167, the rotor movement can be explained by means of the interaction between the rotor disc magnetic moment and the magnetic flux density in the air gap generated by the current in the stator windings, resulting in the rotor torque:

$$T = m \times Baw \qquad (17)$$

where T is the torque (in newtons x meters), m the magnetic moment of the rotor discs (in amperes x square meters) and Baw the magnetic flux density (in tesla) in the air gap, as shown in Fig. 5 and determined by means of Equation (9).

The magnetic moment of one rotor disc results as a common magnetic moment from the sum of the magnetic moments mi of individual permanent magnets around the disc:

$$m = \sum mi \qquad (18)$$

where mi is the magnetic moment of the individual permanent magnets which can be established using different ways, as convenient, depending on the available data for calculations as for instance ([R5] pg. 141):

$$mi = Ni \times Am \qquad (19)$$

where Ni is the equivalent magneto-motive force of the permanent magnet in Ampere x turns and Am the magnet cross-section in square meters, or as:

$$mi = Hc \times lm \times Am \qquad (20)$$

where Hc is the coercive force of the permanent magnet material in amperes per meter, lm the height in meters of the permanent magnet piece and Am the cross-section in square meters of the magnet (see also Equation (1) for the equivalent magneto-motive force of a permanent magnet as the product *Hc x lm),* or as [R10 pg.38]:

$$mi = \frac{\Phi mi \times lm}{\mu rm \times \mu o} \qquad (21)$$

where $\Phi mi$ is the magnetic flux inside the permanent magnet in webers or Volt x seconds, lm the length of the magnet piece in meters, $\mu rm$ the relative magnetic permeability of the magnet material and $\mu o$ the magnetic permeability of the free space in volts x seconds per amperes x meters.

As shown in Fig. 5 and in Fig. 6, the current in the windings on the left and right sides of the torus induces a magnetic flux into the core which for the given current direction determines a south pole at the S-point of the core and a north pole at the N-point. Because of the rotor disc ferromagnetic body there will be a continuous flux leakage around the whole internal circumference of the windings from the windings to the disc creating the appropriate environment i.e. the flux density Baw in which the disc magnetic moment finds the opportunity to develop the rotor torque pushing the rotor to rotate.

The magnetic flux density Baw in the air gap is a function of the magneto-motive force of the left or right windings with their current and number of turns, of the magnetic circuit reluctance and of the area of air gap crossed by the magnetic flux coming from the winding core to the disc body (see Fig. 5 and Fig. 6) and the way to determine it was explained above by means of Equation (9).

According to the electromechanical energy conversion theory ([R4} Chapter 3), a body having a magnetic moment tends to be displaced either by rotation or translation or both ([R6] pg. 167]) towards an existing magnetic field in such a way that the energy developed by their common presence will be minimized. In our case, a torque is developed as an interaction between the rotor and stator in a direction to maximize their mutual inductance or to enable the two magnetic fields (those of the rotor and stator) to align ([R4] pg. 140).

The direction of rotation is governed by the pole alignment tendency. The current in the windings being an alternating one, the direction of the leakage flux in the air gap (Fig. 5) alternates also and this happens in synchronism with the position of the magnetic moment as a motor self commutation process would take place. The direction of torque and rotor movement remains the same.

The generation of the motor torques in both Set 1 and Set 2 can be further described in some more details by means of Fig. 12 and Fig. 13 which show the relative positions of the rotor and stator means along a full cycle of 360°. The attraction and repealing effects between stator and rotor poles for various relative positions are explained.

Fig. 12 shows six typical relative positions of the rotor poles to the stator poles i.e. the rotor N-pole to stator N-pole (a), rotor-N pole to stator W-point (b), rotor N-pole to stator S-pole (c), rotor N-pole to stator changed N-pole at the stator S-point (d), rotor-N pole to stator E-point (e) and rotor-N pole to stator changed S-pole at the stator N-point (f). "Changed" poles means the stator poles after the flux changes its direction. In case of the N to N position (a) the resulting flux in the air gap is weakened because of the counteracting directions of the stator and rotor fluxes and the rotor is in an unstable position and manifests the tendency to move to the left or to the right to reach more stability. Once in operation, the rotor will continue the established revolving direction due to inertia energy even that instable or potentially blocked positions are encountered. Additionally, because of the 90° radial shifting of the two set rotor discs, one of the rotors reaches the maximum torque value in the moment the other one reaches the minimum one and so, the movement of the shaft is ensured. In case of the N to W position (b) the resulting flux becomes stronger in the *W-S* and *E- N* than in the *N-W* and S-E air gap zones pushing the rotor in its CCW direction. In this configuration (b) the rotor reaches its maximum torque value in the counter- clockwise direction. In case of the N to S position (c) the resulting flux becomes equally strong in all regions of the air gap and the rotor can be blocked in case the flux induced by the stator coils maintains its direction. It is now just the moment at which the current in the coils reverses and leads to the core flux reversal creating an N-pole in the core at the stator S-point (d), again an instable relative position from which the rotor escape by continuing the movement in same CCW direction. In case of the N to E position (e) the resulting flux becomes again stronger in two opposite regions of the air gap (*E-N* and *S-W*) and weaker in the other opposite ones *(N-W* and S-E) and the rotor reaches again its maximum torque value in same counter-clockwise direction. The rotor continues the movement up to the N-S relative position (f) with the tendency to be blocked but the next current and flux reversals brings back the core N-pole at the stator *N*-point and the entire cycle will be repeated.

It is here to mention that the "unstable" and "blocked" rotor-stator positions mentioned above, resulting when same or respectively opposite poles are facing each other are smoothly reached due the fact that at the corresponding moments the winding currents and correspondingly core fluxes are changing their directions by passing through zero values (see also Fig. 13).

Fig. 13 presents the relative stator-rotor pole positions during a 360° cycle as well as the voltage and current waves with their polarity change leading to a simultaneous stator flux polarity change and consequently to a continuous and unidirectional torque development. Fig. 13 shows also the various positions of the rotor related to the stator 0° position, in its CCW direction in steps of 45°. The selected example is for the Set 1 of the motor.

The rotor torque and movement can be determined also based on the Lorentz force method ([R4] pg. 113, [R5] pg. 120) in case there are no data available to determine the magnetic moments. The current entering the winding coils 5 (Fig. 2 and Fig. 5) produces the movement of the rotor due to the Lorentz force F arising from the interaction between the winding current and the magnetic flux density Bam generated by the rotor magnets in the air gap as shown by Equations (6a) or (6b):

$$F = Bam \times lw \times iw \qquad (22)$$

where lw given in meters is the total length of the wire segments facing the rotor magnets and iw the current in amperes. As on each winding side a force F (in newtons) will arise at a distance r in meters from the motor shaft, following shaft torque (in newtons x metre) will be the result:

$$T = 2 \times r \times F \qquad (23)$$

The direction of movement depends on the direction of current and obeys the right hand rule as can be checked by means of Fig. 11.

Both methods the torque on magnetic dipoles theory and the Lorentz force lead to same results. One of them may be selected as convenient from the point of view of used parameters and of data which are available.

During the rotor revolving cycle the stator winding currents i1 and i2 change their direction and subsequently lead to a polarity reversal of the winding flux and of the stator core poles (Fig. 13), this change taking place, in case of the quasi-resonant frequency, simultaneously with the rotor pole positions and so, a unidirectional torque (Fig. 17) is automatically ensured by the current self-commutating effect.

The motor has a total torque equal to the sum of the torques of Set 1 and Set 2, having variable and different amounts per cycle due to the different set currents. The torque wave (Fig. 17) depicts the contribution of both sets to the total torque as well as the unidirectional torque action and reflects the angular shifting (Fig. 11) of the two rotor discs.

The mechanical power developed by the motor at the shaft level is ([R3] pg. 220):

$$Pm = T \times \omega \qquad (24)$$

where Pm is the developed mechanical power in watts, T is the net torque in newtons times meters and w the shaft angular speed in radians per second.

The motor reaches a power corresponding to the sum of developed torques of Set 1 and Set 2 each multiplied by the rotor angular frequency. A low level of active electric losses is incurred as a consequence of the circuit resistances (Fig. 8).

High net torques of the order of magnitude of tens of Newton x meters and mechanical powers up to a few kW can be obtained by 50 rot / second with a low motor body volume. Higher torque and power performances can be achieved with higher volumes and weights by means of appropriate and optimised designs.

Some details can be shown regarding the motor torque dependence on time or angle between the rotor and stator pole positions. Equation (17) shows the value of the torque as a product of two parameters i.e. the magnetic moment m of the rotor disc and the flux density Baw in the air gap generated by the winding currents iw (i1 or i2). Whereas the magnetic moment m is a time or angle constant parameter, the flux density Baw is a time or angle dependent parameter and so is the torque value shown in Equation (17) too.

First, the Baw according to Equation (9) is a function of the flux (Φw and depends as shown by Equations (7b) and (8) on the winding currents iw (Fig. 5) which are shown as i1 and i2 in Figures 9 as nearly sinus functions of time or of rotor rotation angle θ:

$$iw = \hat{i}w \times \sin(\theta) \qquad (25)$$

and so, by means of Equations (7b), (8) and (9) the flux density expression becomes:

$$Baw = \frac{Nbtr}{Rc \times Aa} \times \hat{i}w \times \sin(\theta) \qquad (26a)$$

$$Baw = kB \times \hat{i}w \times \sin(\theta) \qquad (26b)$$

$$Baw = \hat{B} \times \sin(\theta) \qquad (26c)$$

with the ^ mark in equations above meaning peak values.

At the same time the torque T itself depends ([6] pg. 167) on the angle θ:

$$T = m \times Baw \times \sin(\theta) \qquad (27)$$

and consequently the torque expression using Equations (25), (26) and (27) becomes:

$$T = m \times \hat{B} \times \sin^2(\theta) \qquad (28)$$

The torque shape as time or angle function depicted in Fig. 17 reflects the detailed discussion shown above.

The circumstance under which the motor operation was described above in terms of voltages, currents, torques and power was an operation frequency equal to the quasi-resonant frequency (foq) which can be calculated by means of Equation (12) corresponding to the LC values of each serial oscillating circuit i.e. the left or the right one as shown in Fig. 8.

Since the motor can experience during its operation also other frequencies, it is interesting to see its response to the range of frequencies as practically encountered in operation from both the electrical and the mechanical points of views.

Several motor operation cases were simulated by means of the SIMETRIX program ([R13]) and the results are presented in Figures 14, 15, and 16. As input data, same electric scheme parameters as for the foq case (see Fig. 8) have been assumed and a frequency range from 1 Hz up to 100 Hz was selected. The amplitudes of the voltages V1 and -V2 at various frequencies have been calculated and their angles have been assumed constant as 0° and 90° respectively. The main simulation outputs are the phasors V1, -V2, Vc, i1, i2 and ic.

The V1, -V2 and Vc phasors as amplitudes and angles are shown in Fig. 14. The relation of these phasors to the other phasors can be followed also by means of the graph in Fig. 10. Whereas the amplitudes of V1 and -V2 increase proportionally with the operation frequency fop, as expected, the amplitude of Vc depending also on the currents i1 and i2 as shown by Equations (13) to (15) increases over-proportionally and reaches a maximum at the resonance frequency fo = 70 Hz after which it starts to decrease. The angles of V1 and -V2 remain constant, at 0° and 90° respectively, as assumed. The Vc angles show a modest excursion (45° down to 25° for operation frequencies from 1 Hz to 50 Hz followed by a relatively large excursion for frequencies around the resonant one.

The oscillating currents i1, i2 and ic in the LC loops of Set 1 and Set 2, between the capacitor C and the inductors L1 and L2 (see Figures 8, 9 and 11) are shown as amplitudes and angles in Fig. 15. The amplitudes of currents i1, i2 and ic grow with the increasing frequency from 1 Hz up to 50 Hz in a moderate mode but after about 50 Hz with a much higher rate up to the resonance frequency of 70 Hz where the currents reach very high values (peak values). For further increasing frequencies, the amplitudes decrease, a typical behaviour for the oscillating circuits working at resonance and nearby ([R9] pg. 192)

As the amplitudes of all currents can reach at operation frequencies higher than the quasi-resonant one values exceeding the thermal rating of the electric conductors of the motor body and of its associated electric oscillating circuit, an electronic control device ECD (Fig. 7 and Fig. 11) is foreseen within the circuit, this device being also used for speed and torque control.

For the example simulation (Figures 8 and 9) relatively high voltages V1 and V2 have been selected to see the effects regarding the resulting currents within the whole electric circuit. Relatively high current amplitudes were the results as can be seen in Figures 9 and 15.

The angles of the current phasors i.e. Ai1, Ai2 and Aic vary also with the operating frequency (see Fig. 15 and Fig. 16). At very low frequencies (1 to 2 Hz), the angles of phasors i1 and i2 start their excursions with 315° (-45°) and remain in same phase up to 20 Hz where a common angle of 270° (-90°) is reached.

From 20 Hz upwards up to 60 Hz the phasor i2 shows a particularly advantageous behaviour i.e. it remain at a constant angle of 270° (-90°), that means in counter-phase position to the voltage -V2 (Figures 14, 15 and Fig. 16). The result is that the current i2 is actively working for a large range of operating frequencies ensuring a 100% torque development. Further, the phasor i2 angles increase in their negative values and i2 loses step by step the active behaviour up to -180° where it becomes reactive i.e. in quadrature with the voltage -V2.

The particular, advantageous behaviour of phasor i2 is due to the simultaneous change in amplitude and angle of the phasor i1 and of phasor ic. The relation between these phasors is shown graphically in Fig. 10 and mathematically by means of Equation (14). The relations in Fig. 10 correspond to the quasi-resonant frequency but such relations can be established also for other operation frequencies. Equations (13) and (14) are valid for all operation frequencies.

From 20 Hz upwards i1 changes continuously its angle (Fig. 15 and Fig. 16) reaching 180° i.e. the counter-phase position to the voltage V1 at the quasi-resonant frequency of 50 Hz, enters in phase with the phasor ic at an angle of 50° at the resonant frequency of 70 Hz (1.41 x 50 Hz) and completes its excursion up to the initial position of 315° (-45°) at a frequency of 100 Hz (2 x 50 Hz).

The angle excursion of the i1 phasor is continue and very large and the phasor reaches its 100% active work condition by coming in counter-phase with the voltage phasor V1 at 180° only for frequencies very tight to the quasi-resonant one (50 Hz) i.e. for a very short frequency range. But phasor i1 can still be useful for frequencies keeping it between its active and reactive relation to V1 in the range of 35 Hz to 55 Hz, a satisfactory one. Outside of this range, i1 leads to a braking effect but as long as i1 is lesser than i2 (Figures 9), the braking effect is overcome by the driving effect of i2 (Fig. 15).

The ic phasor angle excursions are shown in Fig. 15 and Fig. 16. They are useful for an overview of all voltage-current relations (see also Fig. 10).

The voltages and currents for various operation frequencies are shown in Figures 14, 15 and 16 by means of black-and-white graphs because of the PCT Regulations. A much better reading and understanding is possible by means of coloured graphs which are also available and can by provided if required during the search and examination processing.

As an outcome of the analysis of the motor behaviour at various operation frequencies beside the quasi-resonant one it can be mentioned that the motor has a high operation flexibility by keeping very good performances for a frequency range of 30% to 120% of the quasi-resonant one.

Concluding the detailed description of the preferred embodiment and operation of the sui generis motor claimed by the present invention it is also to emphasize its particular properties regarding the energy issues.

The motor works based on the internally developed energy as a result of the interaction between the magnetic moment of the permanent magnets sitting around the rotor discs and the magnetic flux density induced in the motor air gap due the currents supplied by the associated electric oscillating circuit (see Fig. 5, Fig. 11 and Formula 17).

Due to the proposed design, each rotor disc becomes a magnetic dipole having a total magnetic moment corresponding to the magnetic moments of the individual permanent magnets and to the number of the magnets.

The magnetic moment of a given permanent magnet is an outside reflection of the magnetic field produced by the orbital motions and spins of electrons (so-called "Ampèrian currents") within the permanent magnet material which lead to a magnetization within the material and to a magnetic field outside and can exert a force on current-carrying conductors and on other permanent magnets too ([R10, pg. 3]). The currents associated to the orbital motion of electrons in a permanent magnet atom have been first mentioned by Ampère (1775-1836), [R8]) as "molecular currents" (see also [R12] pg. 4-5) free of any movement impediment and consequently able to produce a magnetic field without any energy to be gained from outside. The "classical" model of the magnetic moments based on the concept of the electric charge in motion or on the "Ampèrian currents" was later supplemented by the more accurate quantum mechanical model ([R10, pg. 265).

So, a permanent magnet ([R10, pg. 363]) is a passive device used to generate a magnetic field, that is to say it does not need an electric current flowing in a coil or solenoid to maintain the field. The energy needed to maintain the magnetic field has been stored once when the permanent magnet was charged i.e. magnetized initially by means of a high field strength and then brought to remanence when the applied field was removed.

As long as the conditions for the stability of the permanent magnet properties are ensured as for instance the operation temperature to be kept below the Curie temperature, say 300° C ([R11, pg. 59]) and very high demagnetizing fields are avoided, the magnetic moment of the rotor is permanently available.

The currents supplied by the LC circuit are typical oscillating currents between the circuit inductors and capacitors which store energy in the form of magnetic field and respectively electric field, enabling a permanent exchange of energy between them, back and forth and creating as long as excited by an alternating voltage source, permanent alternating currents with a frequency corresponding to the circuit working frequency.

Despite the reactive character of the oscillating currents originating from inductors and capacitors, they can act as active currents due to the particular design and operation mode of the claimed motor in which at the preferred quasi-resonance frequency, the currents are brought in counter-phase with the corresponding exciting voltages and consequently the winding fluxes and core poles are kept in pace and in the appropriate working relation with the rotor pole positions or with the rotor magnetic moment (see Figures 9 to 13).

The LC oscillating circuit is driven by an alternating voltage generated by the motor itself, a self exciting property of the motor. The unidirectional torque of the motor (Fig. 17) is due to the motor self commutation capability (Fig. 13).

The oscillating currents self and permanently generated by the motor LC circuit induce in the stator windings and core a magnetic flux and in the air gap a flux density which together with the rotor permanently available magnetic moment generates, according to the electromechanical energy conversion principles ([R4 Chapter 3]) or to the force and torque on magnetic dipoles theory ([R6] pg. 167), the motor torque and by means of the unidirectional angular displacement of the rotor, a continuous rotating movement of the motor shaft. Hence, there is no doubt regarding the self driving property of the proposed motor.

The motor has a simple construction and therefore it is easy to be manufactured. It is very simple to be operated and is almost maintenance free. The motor is environmentally very clean. No emissions, no radiations and is very silent.

INDUSTRIAL APPLICABILITY

The motor presented herein has a wide range of industrial applications being able to face mechanical loads from fractional to tens of kW and even more depending on size and design. The main area of application are vehicles (bicycles, mopeds, cars, boats), electric (in case of a motor-generator design) or mechanical power supply especially in remote areas and everywhere a totally independent and environmentally clean energy source is required. The motor with an appropriately coupled generator can also be used for household supply and for co-generating purposes being connected directly or via a rectifier-inverter and a smart meter to electricity authorities. The electric energy co-generation by connecting SGME motor-generators to power distribution networks can become a very attractive electricity mass production coming from small company or private even household based sources but from many of them. A wide field for further research, design and experimental work is opened.

REFERENCES:

[R1] - J. R. Hendershot Jr and T.J. E. Miller: "Design of brushless permanent-magnet motors", Magna Physics Publishing and Clarendon Press - Oxford, 1994

[R2] - Gordon R. Slemon: "Electric Machines and Drives", Addison-Wesley Publishing Company, Inc. 1992

[R3] - Stephen J. Chapman: "Electric Machinery Fundamentals", McGraw-Hill International Edition, 1991

[R4] -A. E. Fitzgerald, Charles Kingsley Jr., Stephen D. Umans: "Electric Machinery", McGraw-Hill, 2003

[R5] - F.T. Ulaby: "Electromagnetics for Engineers", Pearson Education, 2005

[R6] - Melvin Schwartz: "Principles of Electrodynamics", Dover Publications, Inc., 1987

[R7] - Donald G. Fink and H. Wayne Beaty: "Standard Handbook for Electrical Engineers", McGraw-Hill, 2000

[R8] - James Clerk Maxwell: "A Treatise on Electricity & Magnetism, Volume Two", Dover Publications, Inc., 1954 (an unabridged, slightly altered republication of the third edition published by the Clarendon Press in 1891)

[R9] - Paul Scherz: "Practical Electronics for Inventors", Second Edition, McGraw-Hill, 2007

[R10] - Jiles David: "Introduction to Magnetism and Magnetic Materials", Second Edition, Taylor & Francis Group, 1998

[R11] - Peter Campbell: "Permanent Magnet Materials and their Applications", Cambridge University Press, 1994

[R12] - Nicola Spaldin: "Magnetic Materials", Cambridge University Press UK, 2003

[R13] - CATENA, SIMetrix Technologies Ltd.: "SIMetrix / SIMPLIS Simulator", London, 2006

**Claims**

1. A sui generis magneto-electric motor named further a SGME motor consisting of a motor body with stator and rotor parts including permanent magnets and of an electric inductor-capacitor oscillating circuit named further the LC circuit and being able to operate in a self driving mode based on its internal energy developing sources i.e. the permanently available magnetic moment of the permanent magnets and the permanently circulating currents between the inductors and the capacitors of the oscillating LC circuit.

2. The SGME motor according to claim 1 whose motor body consists of a stator and of a rotor in a two stator-rotor set configuration with a common motor shaft (Fig. 1), **characterised in** some more detail by:

   - a particular stator design wherein for each stator-rotor set (Fig. 2) a ferromagnetic core of a torus shape centred to the motor shaft carries two coils of enamelled copper wires wrapped around the core to form a left and a right winding related to the torus vertical axis
   - a particular rotor design wherein a common shaft holds two discs (Fig. 1), each disc of a ferromagnetic material carrying a plurality of permanent magnets (Fig. 2) of neodymium-iron-boron type and of circular segment profile, distributed around the discs with their northern and southern poles in such a way as to enable each rotor disc to become a magnetic dipole with radial pole orientation (Fig. 3) and having its own magnetic moment; a 90° radially shifted position to each other of the two rotor discs sitting on the common shaft and belonging to the two stator-rotor sets enables a 90° shifting of the north-south direction of the dipoles (Fig. 4), a key characteristic of the claimed invention.

3. The SGME motor according to claims 1 and 2, whose whole electric circuit (Fig. 7) consists of the windings of both stator-rotor sets and of the attached, external LC oscillating circuit part which comprises two inductors L1e and L2e and one common capacitor bank C altogether installed in a way to form two series oscillating circuits connected in parallel at the nodes Nc and No to share out the common capacitor bank C. The external inductors Le are optimized air gapped, high permeability ferromagnetic core inductors to enable to achieve the required inductances and to keep the inductance value as constant as possible in relation to the variable operation currents. The Li1 and Li2 are the stator winding inductances which have current independent values due to the relatively high rotor-stator air gap. A manually and automatically working electronic control device ECD for current limiting and motor speed / torque control purposes is included.

4. The SGME motor according to claims 1 to 3 wherein the permanent magnets of each rotor disc induce magnetic fluxes $\Phi m$ along the magnetic circuits appearing on both the left and the right sides of the stator-rotor sets (Fig. 3). The flux paths include the air gap, the torus branches, the disc body and the magnets themselves and cross the internal faces of the winding coils too. Due to the full radial symmetry of the stator-rotor structure, the magnetic circuit reluctance remains the same irrespective of the stator-rotor relative positions with corresponding advantages including the avoidance of the cogging effect and due to the uniform distribution of the permanent magnets around the discs, a uniform flux $\Phi am$ and flux density Bam in the air gap are achieved.

5. The SGME motor according to claims 1 to 4, wherein after the motor start by means of an external mechanical or electrical device, electromotive forces are induced by the permanent magnet flux into the stator windings of both motor sets during the relative rotating movement between rotor and stator (Fig. 3 and Fig. 11), according to the Faraday Law for moving conductors in a static magnetic field or moving field related to static conductors. Voltages further named V1 and V2 in the windings of Sets 1 and 2 result as periodic waves of triangular shape with a frequency equal to the motor operation frequency and are ¼ period shifted to each other due to the 90° radial shifting of the two set discs (Figures 4, 7, 9a, 9b and 11).

6. The SGME motor according to claims 1 to 5, wherein the voltages V1 and V2 applied to the interface terminals of the motor body electric circuit and of the external part of the LC oscillating circuit (Figures 7 and 11) make the whole electric circuit working, create an alternating driving voltage Vc at the electric scheme node Nc (Figures 8 and 11) and give rise to the oscillating currents ic through the capacitor and i1 and i2 through the windings of the two sets with their specific relations due to the claimed design (Figures 8, 9, 10 and 11). The voltages and currents within the particular electric circuit scheme as claimed by the present invention (Figures 7, 8 and 11) can be determined only by means of specialised computer programs used for electric network steady and transient states simulation.

7. The SGME motor according to claims 1 to 6, whose LC oscillating circuit works as two serial oscillating circuits connected in parallel at the nodes Nc and No (Figures 7, 8 and 11) and has two relevant eigenvalues, one being the resonant frequency for which the circuit responds as having the two set inductances L1 and L2 working in parallel and also in parallel with the capacitor bank, with their currents i1 and i2 in counter-phase and the other one being a quasi-resonant frequency for which the circuit responds as seeing the two set inductances separately (only each one set inductance works in parallel with the capacitor bank), their currents i1 and i2 coming in quadrature to each other (Fig. 10).

8. The SGME motor according to claims 1 to 7 wherein the inductance and capacitance values of its inductors and respectively capacitor bank are selected to enable the relevant operation frequency i.e. the quasi-resonant one to be of the order of magnitude of industrial frequencies proper for the operation of mechanical and electric rotating machineries e.g. 50 Hz. The resonant frequency which leads, as known, to extremely high currents and anyway is not proper for the operation of claimed SGME motor is avoided to appear by means of the automatically working electronic control device ECD (Figures 7 and 11).

9. The SGME motor according to claims 1 to 8 wherein the currents i1 and i2 flowing through the stator windings (iw) are the source of the magnetic flux Φw induced in the stator core branches (Fig. 5) and generate the magnetic flux Φaw and the flux density Baw in the air gap as well as the northern and southern poles and pole hemispheres in the stator core (Figures 5, 6 and 11). In case of the quasi-resonant frequency the currents i1 and i2 are keeping pace and come in phase (counter-phase) with the voltages V1 and V2 (Figures 9 and 10) i.e. with the rotor magnetic poles in the opportune position (Figures 11 and 13) to give rise to the rotor torque (Figures 12 and 13) as would have been actually active currents even that they are originating from inductors and capacitors generally considered as reactive current sources.

10. The SGME motor according to claims 1 to 9, which develops, as stated by the electromechanical energy conversion principles or by the force and torque on magnetic dipoles theory, a torque proportional to the product between the rotor magnetic moment due to the permanent magnets sitting around the rotor discs (Fig. 3) and the magnetic flux density Baw generated in the air gap due to the stator winding currents iw (Fig. 5) permanently supplied by the LC oscillating circuit, the interaction between the rotor magnetic moment or flux and the air gap flux induced by the winding currents being depicted in Figures 6, 11, 12 as well as in Fig. 13 which refers also to the detailed torque development during a full 360° rotor revolving cycle. The total motor torque is equal to the sum of the Set 1 and Set 2 torques and the motor power corresponds to the sum of the developed torques multiplied by the rotor angular frequency.

11. The SGME motor according to claims 1 to 10, whose response to the actual operation frequencies can be visualised by means of the voltage and current wave amplitudes and phasor angles as found out based on the computer simulation results depicted in Figures 14 to 16 wherein the voltage amplitudes and phasor angles (Fig. 14) and the current amplitudes and phasor angles in Cartesians coordinates (Fig. 15) and the current phasor angles in polar coordinates (Fig. 16) are shown with their excursions as a function of the operation frequency. The current amplitudes (Fig. 15) can be kept within acceptable limits from the thermal effect point of view, for an operation frequency range which includes the quasi-resonant one and extends slightly above it.

12. The SGME motor according to claims 1 to 11, for which apart from the optimal operation frequency which is the quasi-resonant one and for which both sets work with their currents i1 and i2 keeping full pace and phase with the voltages V1 and V2 (Figures 9 and 10) and with the appropriate rotor pole positions (Fig. 13) and consequently develop full torques, the Set 2 current i2 keeps pace and phase with the voltage V2 i.e. with the corresponding rotor poles and therefore keeps its capability to develop full torque, for a large range of operation frequencies. Even if the Set 1 current i1 shows an ample angle excursion and can become less active for frequencies substantially deviating from the quasi-resonant one (Fig. 15 and Fig. 16), by being smaller than i2, it does not jeopardize the total motor torque.

13. The SGME motor according to claims 1 to 12, in which during the rotor revolving cycle the stator winding currents i1 and i2 change their polarity and subsequently lead to a polarity reversal of the winding flux and of the stator core poles (Fig. 13), this change taking place, in case of the quasi-resonant frequency, simultaneously with the rotor pole position change and so, a unidirectional torque (Fig. 17) is automatically ensured by the current self-commutating effect.

14. The SGME motor according to claims 1 to 13, having a wide range of industrial applications, being able to face mechanical loads from fractional to tens of kW and even more depending on size and design. The main area of application are vehicles (bicycles, mopeds, cars, boats etc.), electric (in case of a motor-generator design) or mechanical power supply especially in remote areas and everywhere a totally independent power and energy sources are required. The motor with an appropriately coupled generator can also be used for household supply and for co-generating purposes being connected directly or via a rectifier-inverter and a smart meter to electricity authorities. The electric energy co-generation by connecting SGME motor-generators to power distribution networks can become a very attractive electricity mass production coming from small company or private even household based sources but from many of them.

15. The SGME motor according to claims 1 to 14, which offers environmentally impeccable clean power and energy sources, having no carbon or other chemical substance emissions, no greenhouse effects, no radiations, very low heating effects, very low noise level.

Fig. 1: Longitudinal cross-section view of the motor body

Fig. 2: Transversal cross-section through one of the two stator-rotor sets

Fig. 3: Magnetic flux generated by the rotor permanent magnets

Rotor movement

Fig. 4: Simplified elevation view of Set 1 and Set 2 with the claimed position of their rotor poles

Fig. 5: Magnetic flux generated by the stator windings currents

Fig. 6: Combined magnetic fluxes generated by the permanent magnets and by the winding currents

EP 2 495 853 A1

External part
of the LC
oscillating
circuit

Interface
terminals →

Nc

L1e

C

ECD

L2e

Motor
body

L1i

L2i

N

S

S     N

Set 1

No

Set 2

Fig. 7: The entire motor electric circuit with its internal and external parts of the LC oscillating circuit

Fig. 8: Motor electric scheme as seen by the computer simulation program

Fig. 9a: Voltage and current waves in the motor electric circuit at 50 Hz

Fig. 9b: Voltage and current waves in the motor electric circuit at 50 Hz with peak and rms values

Fig. 10: Voltage and current phasor diagram in case of the
quasi-resonant frequency

External part
of the LC
oscillating
circuit

Interface
terminals

Motor
body

i1    Nc    i2

L1e    Vc    ic    L2e

i1    C    i2

i1    ECD    i2

i1    i1    i2    i2

V1    V1    -V2    -V2

N    S

L1i    N    S    S    N    L2i

S    N

i1    i1    i2    i2

i1    No    i2

Set 1    Set 2

Fig. 11: Voltages and currents in the whole electric circuit and the stator-rotor magnetic pole positions

Fig. 12: Main phases of the motor torque development

Fig. 13: relative stator-rotor pole positions during a full cycle and the continuous torque development

Fig. 14: Voltages for various operation frequencies

Fig. 15: Currents for various operation frequencies

Angles of the current phasor ic

Angles of the current phasor i1

Angles of the current phasor i2

Fig. 16: Angles of phasors ic, i1, i2
as function of operatrion frequencies

Torque 1

Torque 2

Common torque (Sum of T1+T2)

Fig. 17. Shape of the total motor torque as sum of Set 1 torque T1 and Set 2 Torque T2
The peak values of T1 and T2 are conventionally selected as 0.75 and 1.0

**Europäisches Patentamt**
**European Patent Office**
**Office européen des brevets**

**DECLARATION**

which under Rule 63 of the European Patent Convention EP 11 00 1774
shall be considered, for the purposes of subsequent
proceedings, as the European search report

**Application Number**

EP 11 00 1774

| | CLASSIFICATION OF THE APPLICATION (IPC) |
|---|---|
| The Search Division considers that the present application, does not comply with the provisions of the EPC to such an extent that it is not possible to carry out a meaningful search into the state of the art on the basis of all claims<br><br>Reason:<br><br>The application does not comply with the requirement of Article 83 EPC because it does not disclose the invention in a manner sufficiently clear and complete for it to be carried out by a person skilled in the art.<br><br>As consistently presented throughout the application as filed and as already pointed out in the invitation under Rule 63(1) EPC, the invention relates to a magneto-electric motor and an electric inductor-capacitor oscillating circuit which is able to operate in a self driving mode based on only internal energy (see e.g. p. 4, 141 - page 6, l. 219).<br><br>No external power source is required for the motor to function (see e.g. p. 2, l. 57-59 and p. 4, l. 118-122).<br><br>As no energy is supplied to the motor and/or the oscillating circuit for driving the motor after the motor has been started, it is evident that the motor will stop as soon as the initial amount of energy is dispersed due to a load of the motor, friction and heating of parts of the motor and the oscillating circuit. As it follows from p. 2, l. 69-71 ("self driving mode") and p. 7, l. 244-253 that this motor is supposed to perform a steady rotation, this motor is a perpetuum mobile and its underlying principle is contrary to well established natural laws. Thus there is a fundamental insufficiency in the invention in the sense that it cannot be carried out by a person skilled in the art (see Guidelines C-II, 4.11).<br>                                                       -/-- | INV.<br>H02K53/00 |

| Place of search | Date | Examiner |
|---|---|---|
| Munich | 18 January 2012 | Sollinger, Martin |

EPO FORM 1504 (P04F37)

**Europäisches Patentamt**
**European Patent Office**
**Office européen des brevets**

## DECLARATION

Application Number

which under Rule 63 of the European Patent Convention EP 11 00 1774
shall be considered, for the purposes of subsequent
proceedings, as the European search report

| | CLASSIFICATION OF THE APPLICATION (IPC) |
|---|---|
| The Search Division considers that the present application, does not comply with the provisions of the EPC to such an extent that it is not possible to carry out a meaningful search into the state of the art on the basis of all claims<br><br>Reason: | INV.<br>H02K53/00 |

The application does not comply with the requirement of Article 83 EPC because it does not disclose the invention in a manner sufficiently clear and complete for it to be carried out by a person skilled in the art.

As consistently presented throughout the application as filed and as already pointed out in the invitation under Rule 63(1) EPC, the invention relates to a magneto-electric motor and an electric inductor-capacitor oscillating circuit which is able to operate in a self driving mode based on only internal energy (see e.g. p. 4, 141 - page 6, l. 219).

No external power source is required for the motor to function (see e.g. p. 2, l. 57-59 and p. 4, l. 118-122).

As no energy is supplied to the motor and/or the oscillating circuit for driving the motor after the motor has been started, it is evident that the motor will stop as soon as the initial amount of energy is dispersed due to a load of the motor, friction and heating of parts of the motor and the oscillating circuit. As it follows from p. 2, l. 69-71 ("self driving mode") and p. 7, l. 244-253 that this motor is supposed to perform a steady rotation, this motor is a perpetuum mobile and its underlying principle is contrary to well established natural laws. Thus there is a fundamental insufficiency in the invention in the sense that it cannot be carried out by a person skilled in the art (see Guidelines C-II, 4.11).

-/--

| Place of search | Date | Examiner |
|---|---|---|
| Munich | 18 January 2012 | Sollinger, Martin |

EPO FORM 1504 (P04F37)

Europäisches
Patentamt

European
Patent Office

Office européen
des brevets

**DECLARATION**

Application Number

which under Rule 63 of the European Patent Convention EP 11 00 1774
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|

Reason:

In the response to the invitation under Rule 63(1) EPC, the applicant did not include convincing arguments that a meaningful search is possible. Especially, the applicant confirmed the opinion of the search division that no extra energy is supplied from the outside of motor and the oscillating circuit (see lines 46 and 47 of the response).

Further, as the motor operates in a manner clearly contrary to well-established physical laws, the application also does not comply with the requirement of Articles 52(1) EPC and Article 57 EPC because the invention cannot be considered as susceptible of industrial application (see e.g. the Guidelines C-IV, 5.1).

As a result, no search could be made in this case.

The applicant's attention is drawn to the fact that a search may be carried out during examination following a declaration of no search under Rule 63 EPC, should the problems which led to the declaration being issued be overcome (see EPC Guideline C-VI, 8.2).

| Place of search | Date | Examiner |
|---|---|---|
| Munich | 18 January 2012 | Sollinger, Martin |

EPO FORM 1504 (P04F37)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. R. HENDERSHOT JR ; T.J. E. MILLER.** Design of brushless permanent-magnet motors. Magna Physics Publishing and Clarendon Press, 1994
- **GORDON R. SLEMON.** Electric Machines and Drives. Addison-Wesley Publishing Company, Inc, 1992
- **STEPHEN J. CHAPMAN.** Electric Machinery Fundamentals. McGraw-Hill International Edition, 1991
- **A. E. FITZGERALD ; CHARLES KINGSLEY JR. ; STEPHEN D. UMANS.** Electric Machinery. McGraw-Hill, 2003
- **F.T. ULABY.** Electromagnetics for Engineers. Pearson Education, 2005
- **MELVIN SCHWARTZ.** Principles of Electrodynamics. Dover Publications, Inc, 1987
- **DONALD G. FINK ; H. WAYNE BEATY.** Standard Handbook for Electrical Engineers. McGraw-Hill, 2000
- **JAMES CLERK MAXWELL.** A Treatise on Electricity & Magnetism, Volume Two. Dover Publications, Inc, 1954
- **PAUL SCHERZ.** Practical Electronics for Inventors. McGraw-Hill, 2007
- **JILES DAVID.** Introduction to Magnetism and Magnetic Materials. Taylor & Francis Group, 1998
- **PETER CAMPBELL.** Permanent Magnet Materials and their Applications. Cambridge University Press, 1994
- **NICOLA SPALDIN.** Magnetic Materials. Cambridge University Press UK, 2003
- **CATENA.** SIMetrix / SIMPLIS Simulator. SIMetrix Technologies Ltd, 2006